# EUROPEAN PATENT APPLICATION

(11) **EP 4 840 684 A1**
(43) Date of publication of application: **18.11.2026**
(21) Application number: 25175875.1
(22) Date of filing: 12.05.2025
(51) Int. Cl.: B60L 55/00, B60L 53/12, B60L 53/53, B60L 53/55, B60L 53/63, B60L 53/66, B60L 58/12, B60L 58/13

(54) **ENERGY SAFETY BUFFER SYSTEM AND METHOD FOR WIRELESS CHARGING OF AN ELECTRIC VEHICLE**

(71) Applicant: WiTricity AI Tech, LLC, Stuart, FL 34997 (US)
(72) Inventor: MARKMANN, Sergej, Midway, 31320 (US); ATASOY, Oguz, Midway, 31320 (US)
(74) Representative: HG Law International LLP

(57) **Abstract**

Systems and methods for charging an electric vehicle are described. A ground assembly (502) of a wireless power transfer (WPT) system for wirelessly charging an electric vehicle, comprises power transfer circuitry and an energy buffer (512). The power transfer circuitry is configured to cause: a first power transfer in which power is transferred wirelessly to and stored in an energy storage device of the electric vehicle (506); a second power transfer in which power is transferred to and stored in the energy buffer (512) of the ground assembly (502); and automatic discharge of an amount of stored energy in the energy buffer (512) based on a state of charge of the energy storage device.

## Description

### TECHNICAL FIELD

This application relates to energy safety buffers, and in particular, but not exclusively, to providing an energy safety buffer while performing wireless charging of an electric vehicle.

### BACKGROUND

Wireless power transfer (WPT) for charging electric vehicles is described in detail in patents such as U.S. Patent 8,933,594, titled "Wireless energy transfer for vehicles", and U.S. Patent 9,561,730, titled "Wireless power transmission in electric vehicles", which are incorporated herein by reference in their entirety. More specifically, these patents refer to inductive WPT between a ground-based unit, comprised within a ground assembly (GA), of a wireless charging station, and a vehicle-based unit, comprised within a vehicle assembly (VA).

The increasing prevalence of electric vehicles (EVs) necessitates efficient and reliable charging solutions. This may present particular challenges for regions with a less reliable electrical energy supply infrastructure, and which may for example be subject to infrequent or periodic power drops or power outages. Such power drops or power outages may, in some regions, be related to an increase in incorporation of green energy solutions into the electrical grid. Such increased reliance on green energy solutions may present increasing and ongoing challenges for electrical grid balancing, due for example to fluctuating energy supply as a result of time-of-day or fluctuating weather conditions. Infrequent or periodic power drops or power outages, whether as a result of increasing reliance on green energy solutions or as a result of other factors associated with grid infrastructure and management, may present challenges in the transition to EVs as a primary mode of transport in many such regions. Factors such as sudden changes in weather or unexpected equipment failures can create discrepancies between forecasted and actual supply. These challenges can be compounded in larger regions where a single grid might serve diverse areas with different energy profiles and needs.

Inductive WPT systems make use of resonant circuits, also known as resonator tanks, which comprise a mix of inductors and capacitors to achieve efficient energy transfer at specific operating frequencies. The resonator tank stores energy in the form of electric and magnetic fields, which facilitates the coupling of energy between a transmitter and receiver. The inherent energy storage capabilities of resonant circuits can lead to challenges, particularly during sudden interruptions in power supply, such as resulting from a regional power drop or power outage.

One challenge presented by such sudden power drops or outages can relate to transient effects occurring when a WPT system experiences a sudden loss of input power. An abrupt cessation of driving power may prevent energy stored in the resonator tank from dissipating smoothly and can result in undesirable transient behaviours. For instance, the stored energy may manifest as voltage spikes across components. Additionally, the resonator tank may enter a state of damped oscillation, which, depending on the quality factor (Q-factor) of the circuit, could persist long enough to interfere with other system operations or nearby electronics. These transient effects are especially problematic for hardware components such as semiconductors, capacitors, and inductors.

The regional nature of grid instabilities, and the resultant periodicity and extent of power outages that can cause such transients, may lead to region-specific differences in the lifetime of such hardware elements, which may cause differing levels of hardware usability and viability across different regions. Such issues could lead to differing levels of WPT system uptake and user experience across different regions, therefore potentially affecting a transition to greener solutions over time.

The challenges posed by transients in WPT systems highlight the need for strategies to mitigate these effects and protect or improve the lifetime of hardware elements. Potential region-specific effects highlight the further need to harmonise regional variations in hardware lifetime, for example to achieve consistent hardware performance, usability, and user experience across all regions. It is therefore desired to provide systems and methods to assist in stabilizing the wireless power transfer process against, potentially region-specific, power availability fluctuations and power outages, while reducing effects associated with power outage-related transients on wireless power transfer hardware.

### SUMMARY

Systems and methods of the present disclosure provide an energy buffer solution for use with WPT systems, and in particular for use with WPT systems for transferring power wirelessly between an electric vehicle and either a source or a load. WPT systems may be configured, for example, to transfer power from a power source, such as an electrical grid, to a vehicle. The WPT systems may be further configured to transfer power from the vehicle to a load, such as to electrical circuitry of a home (such as by way of a home battery system) or to the electrical grid. The energy buffer may comprise any suitable storage device and may, in the event of an application of a load to the WPT system, such as in the form of a power drop or a power outage in a region, perform automatic discharge of an amount of energy stored therein. For example, regions implementing WPT systems may experience periodic power outages at an electrical grid thereof, such as resulting from electrical grid imbalance. Such power outages may cause transient events, such as overvoltage or overcurrent, associated with energy stored in a resonator tank of WPT systems, which could in some cases cause unnecessary wear and tear on WPT system componentry.

It may therefore be desired to mitigate effects of such power outages, for example on WPT systems, by way of the provision of an energy buffer configured to decouple the WPT system from the source of the power outage (such as an electrical grid) and to provide continuous wireless power transfer during periods of power outage. An amount of energy storage of the energy buffer may, in some examples, be informed by historic power outage data, and may for example be associated with, or comprise any suitable correlation with (such as an average of), a duration of such power outages or an amount of power transfer lost during such power outages. The energy buffer may therefore, in some examples, be configured to provide region-specific power outage mitigation. The energy buffer may in some examples comprise an energy storage device configured for self-discharge of stored energy following the application of a load thereto, and without the requirement for any external control signals, which may act to reduce latency in the discharge of stored energy, and may for example be suitable for use in applications requiring an uninterrupted power supply.

In some examples, the energy buffer may comprise any suitable combination of energy storage devices, such as one or more supercapacitors configured for fast discharging over shorter periods, and/or one or more batteries configured for sustained discharge over longer periods, which may provide a suitable combination of fast reaction time and adequate discharge duration for accommodating region-specific periods of power outage. In some such examples, the particular combination of energy storage devices may be selected based on the historic power outage data for the region.

In accordance with one aspect of the present disclosure, there is provided a ground assembly of a wireless power transfer (WPT) system for wirelessly charging an electric vehicle. The ground assembly comprises power transfer circuitry and an energy buffer. The power transfer circuitry is configured to cause, e.g., perform, a first power transfer in which power is transferred wirelessly to, and for example stored in, a load such as an energy storage device of an electric vehicle. The power transfer circuitry is configured to cause, e.g., perform, a second power transfer in which power is transferred to, and stored in, the energy buffer of the ground assembly. The power transfer circuitry is configured to cause, e.g., perform, automatic discharge of an amount of stored energy in the energy buffer based on a state of charge of the energy storage device.

In the context of the present disclosure, the term "power transfer circuitry" may be understood to mean any suitable circuitry configured for providing wireless and/or wired power transfer. The first power transfer is performed wirelessly, and may be performed such as when the power transfer circuitry is engaged with corresponding wireless power transfer circuitry of an electric vehicle. For example, the power transfer circuitry of the ground assembly may comprise a wireless power transfer coil of the ground assembly configured to couple with a wireless power transfer coil of a vehicle assembly of a vehicle for providing the wireless power transfer. The power transfer circuitry may be configured for transferring power from a power source to the electric vehicle (such as a battery thereof). In some examples wherein the power source is an electrical grid of a region, the wireless power transfer may be performed during a grid-to-vehicle (G2V) operating mode of the wireless power transfer system, or the power transfer circuitry. In some examples, the wireless power transfer system or the power transfer circuitry may be configured for performing wireless power transfer from an electric vehicle (such as the energy storage device thereof) to any suitable load during a vehicle-to-load (V2X) operating mode thereof, such as vehicle-to-grid (V2G) or vehicle-to-home (V2H).

In the context of the present disclosure, the term "automatic discharge" may be understood to mean a discharge occurring in response to any suitable trigger, and for example without requiring actuation or execution by way of an external control signal. The discharge may therefore in some examples be self-discharge or electrostatic discharge, such as in response or reaction to the application of a load to the energy buffer or a discharge terminal thereof.

In the context of the present disclosure, it will be appreciated that the energy storage device may be any suitable energy storage device, such as a battery of the electric vehicle. The term "state of charge of the energy storage device" will be understood to mean any suitable state or indicator of an amount of stored energy in the energy storage device, for example relative to an energy storage capacity (e.g., a charge capacity thereof) or an energy storage threshold. In some examples, the state of charge may be any suitable amount or a percentage of stored energy in the energy storage device, any suitable indicator of a proximity to the energy storage capacity or energy storage threshold, or any suitable status indicator, for example "empty", "full", "below charge threshold", "above charge threshold", "present", "engaged", "absent" or "disengaged". In some examples, the state of charge of the energy storage device may be an indicator of an active operational mode of the power transfer circuitry of the ground assembly. For example, the state of charge may indicate whether the energy storage device is being charged or not charged (for example an activity status of a grid-to vehicle (G2V) operational mode of the ground assembly), or for example if the energy storage device is being used as a source of power transfer, for example to an electrical grid or any other suitable power receiver (for example an activity status of a vehicle-to-load (V2X) operational mode of the ground assembly). In some examples, it will be appreciated that the ground assembly may be configured to access, receive, determine, measure, estimate or predict the state of charge of the energy storage device. In some examples, the state of charge may be accessed or received by way of any suitable storage, and may in some examples be accessed or received by way of cloud storage.

The term "cause automatic discharge of an amount of stored energy in the energy buffer based on a state of charge of the energy storage device" will be understood within the context of the present disclosure to mean causing an amount of stored energy to be discharged to any suitable load based on the state of charge of the energy storage device, and may in some examples comprise determining the load (for example the energy storage device, an electric grid, or an electrical circuitry of any suitable power receiver, such as a home) for receiving the discharged amount of stored energy for example based on the state of charge of the energy storage device. In some examples wherein the state of charge of the energy storage device indicates that the energy stored in the energy storage device is below an energy storage threshold, or if the energy storage device status is empty or indicates that the energy storage device is present or engaged with the ground assembly, or if the operational mode of the ground assembly is G2V, the energy buffer may be configured to automatically discharge any suitable amount of energy stored therein to the energy storage device. In some examples wherein the state of charge of the energy storage device indicates that the energy stored in the energy storage device is above an energy storage threshold, or if the energy storage device status is full or indicates that the energy storage device is absent or disengaged from the ground assembly, or if the operational mode of the ground assembly is V2G, the energy buffer may be configured to automatically discharge any suitable amount of energy stored therein to any suitable load (such as an electrical grid) which is not the energy storage device. The amount of discharged energy from the energy buffer may in some examples be determined by the ground assembly, for example any suitable processor or control circuitry thereof, based on the state of charge of the energy storage device.

The energy buffer may be understood as providing an energy buffer to the energy storage device (such as an electric vehicle battery) such that energy stored therewithin may be used to facilitate continued transfer of power in the event of an interruption associated with the power transfer from a power source, such as resulting from a grid power outage. In some examples, therefore, the energy buffer may receive power transfer at any suitable time instance prior to the receipt of power transfer by the energy storage device. In some examples, the power transfer circuitry may be configured to cause, e.g., perform, the second power transfer before, during or after the first power transfer. The receiving of the second power transfer at the energy buffer may, in some such examples, provide the required amount of stored energy for facilitating the continued transfer of power in the event of an interruption associated with the first power transfer.

In some examples, the performing of the second power transfer, and the resultant storing of the amount of stored energy at the energy buffer may comprise the receipt, at the ground assembly (such as at a processor thereof) of a communication by way of the energy buffer. The communication may, in some examples, comprise an acknowledgement of the second power transfer. In some examples, based on the acknowledgement, the ground assembly (such as a processing device thereof) may be configured to cease, or cause the ceasing of, the second power transfer. Following the acknowledgment, therefore, the ground assembly may be configured to direct all power transfer to the first power transfer. In some examples, the acknowledgement may be based on one or more contract terms associated with the second power transfer.

Interruptions of the first power transfer, e.g., from a power source (such as an electrical grid), may be known or predicted to occur, for example on more than one occasion. Data associated with the occurrence of such interruptions, which may be power drops or power outages, may in some examples be received, determined, calculated, measured, sensed, estimated or predicted by any suitable method and using any suitable processing device or sensor. Such data may be associated with, or used to determine, the amount of stored energy of the energy buffer, which may for example be an amount required for providing an energy buffer against such interruptions. In some examples, during the second power transfer, the power transfer circuitry may be configured to cause transfer of an amount of power based on, e.g., equal to, a power transfer threshold of the energy buffer, e.g., before performing the first power transfer. The power transfer threshold may, for example, be associated with a minimum amount of energy required for providing an energy buffer associated with the interruption, such as power drops or outages. The amount of energy required to provide such an energy buffer (for example by way of the automatic discharge) may be informed by an estimated or predicted duration of one or more such interruptions, or a received, measured, sensed or determined duration of one or more prior such interruptions. As such, duration data of one or more prior or upcoming interruptions, such as any suitable pattern or correlation (such as an average) thereof, may be used to determine the power transfer threshold. In some examples, one or more energy buffer characteristics of the energy buffer may be accessed, received, measured, estimated, predicted or determined, such as by any suitable processor or circuitry (such as a processor or circuitry of the ground assembly), for example a state of charge of the energy buffer. The one or more energy buffer characteristics may be used to determine the performing of the second power transfer, such as an amount and/or a duration of the second power transfer to be performed. By way of example, the power transfer circuitry of the ground assembly may be configured to perform the second power transfer based on any combination of the power transfer threshold and the state of charge of the energy buffer. Such one or more energy buffer characteristics, for example the state of charge, may be accessed, received or retrieved by way of any suitable method, and may in some examples be accessed, received or retrieved by way of a cloud storage device, such as of a server device.

In some examples, the power transfer threshold may be based on an average duration of a loss of power to the ground assembly. The interruptions or loss of power may be any suitable loss of power, such as a power outage or power drop. In some examples, the loss of power may be an electrical grid power outage in a geographical region of the ground assembly. It will be appreciated that the geographical region may be any suitable region, comprising the ground assembly, for which power outage data may be collected and grouped, such as an individual property, street, block, neighborhood, town, parish, city, borough, municipality, county, province, state, country or territory. Power drops or power outages may in some examples be region-specific, and may for example be associated with a grid infrastructure of a particular region. For example, regions may comprise a varied reliability on renewable energy sources which can experience fluctuations in supply to an electrical grid. Grid infrastructure, such as availability and reaction time of alternative power sources of a region may result in a varied response time to power drops or power outages in the region. It may be determined, for example based on historic or predicted power drop or power outage data for a particular region that an amount of power transfer or a power transfer duration, may be most likely to be affected by such a power drop or power outage. A pattern or correlation in (such as an average of) power drop data or power outage data associated with a region of the ground assembly may in some examples be used to determine the power transfer threshold. In some such examples, systems and methods may comprise receiving, sensing, determining, calculating, predicting, estimating or measuring the power drop data or the power outage data for the region of the ground assembly. The power drop data or power outage data may in some examples be determined, detected, measured, estimated or predicted, for example by any suitable processor or circuitry (such as a processor or circuitry of the ground assembly), and may in some examples be used, for example by any suitable processor or circuitry (such as a processor or circuitry of the ground assembly), to determine the power transfer threshold. The power drop data or power outage data for a particular region may be modified or updated over time, for example in response to further power drops or power outages in the region. In some examples, therefore, a dynamic set of data may be used to determine the power transfer threshold, thereby providing a dynamic power transfer threshold which is informed by most recent power drop or power outage data for the region. Such power drop data or power outage data may be accessed, received or retrieved by way of any suitable method, and may in some examples be accessed, received or retrieved by way of a cloud storage device, such as of a server device.

Activity data or usage data associated with use of a ground assembly for performing wireless power transfer may be at least in part based on one more electric vehicles used for providing or receiving the power transfer, and the periodicity and durations of such usage. The amount of energy required to provide an adequate energy buffer against interruptions may therefore be, at least in part, based on such activity data or usage data associated with the ground assembly, such that the amount of energy may be flexible to an individual use case. In some examples, the power transfer threshold may be based on power transfer data associated with the ground assembly, such as comprising the activity data or usage data. The power transfer data will be understood to be any suitable historic data, or predicted, estimated or generated data, associated with power transfer performed at the ground assembly, and may for example include any suitable usage, activity or behavior data associated with power transfer at the ground assembly. The power transfer data (such as any suitable usage, activity or behavior data associated with power transfer at the ground assembly) may in some examples be determined, detected, measured, estimated or predicted, for example by any suitable processor or circuitry (such as a processor or circuitry of the ground assembly), and may in some examples be used, for example by any suitable processor or circuitry (such as a processor or circuitry of the ground assembly), to determine the power transfer threshold. The power transfer data, such as for a particular ground assembly, may be modified or updated over time, for example in response to further activity or usage associated with the ground assembly. In some examples, therefore, a dynamic set of data may be used to determine the power transfer threshold, thereby providing a dynamic power transfer threshold which is informed by most recent activity or usage data for the ground assembly. Such power transfer data may be accessed, received or retrieved by way of any suitable method, and may in some examples be accessed, received or retrieved by way of a cloud storage device, such as of a server device.

Power transfer interruptions, such as resulting from power drops or power outages may be determined or estimated to occur at a particular time, have a particular frequency pattern, or occur in response to a particular trigger. Systems and methods may use such patterns or correlations in interruption data to determine a target time at which a required amount of stored energy should be stored at the energy buffer for providing an adequate buffer against such an interruption. In some examples, such as those where interruptions may occur less predictably, it may be determined that an energy buffer will be required at a particular time, such as when a vehicle may be known, determined or predicted to be engaged with the ground assembly for receiving or providing wireless power transfer. Such a determination may be made based on the activity, behavior, or usage data associated with the ground assembly, or based on any suitable location data, such as historic or real-time location data, associated with the vehicle. In some examples, the power transfer circuitry may be configured to cause transfer of the amount of power equal to the power transfer threshold of the energy buffer at or before a target time. In some examples, the target time is based on power transfer data associated with the ground assembly. Performing the second power transfer for storing energy at the energy buffer, such as based on the power transfer threshold, by a target time, such as prior to performing the first power transfer, may provide improved protection against expected or unexpected power transfer interruptions, such as power drops or power outages.

It will be appreciated that in some examples, performing the second power transfer prior to the first power transfer may cause an impractical delay to the provision of power transfer to the first load (such as the electric vehicle). In some examples, the power transfer circuitry is configured to cause the first power transfer and the second power transfer to be performed simultaneously. Storing energy at the energy buffer by way of the second power transfer while performing the first power transfer may in some examples reduce the amount of unnecessary energy storage at the energy buffer, or reduce an overall amount of time taken in charging an electric vehicle.

The energy buffer will be understood as comprising any suitable device configured for automatic discharge of the amount of stored energy as power to any suitable load, such as the energy storage device of the electric vehicle. The load receiving the automatic discharge may be based on a state of charge of the energy storage device, as described herein, for example as determined and/or controlled by any suitable control circuitry of the ground assembly. In some examples, such automatic discharge may be a self-discharge or electrostatic discharge for example as a result of an application of a load thereto. In some examples, the energy buffer, or a first energy storage component thereof, comprises one or more supercapacitors. Any suitable self-discharging or electrostatic discharging energy buffer will be appreciated.

Power transfer interruptions may occur suddenly and may persist for varying durations. In some examples, the energy buffer may comprise a first energy storage component and a second energy storage component. The first and second energy storage components may provide different forms of energy buffer capability, for example to provide flexibility for ground assemblies where power transfer interruptions (such as power drops or power outages) may occur for longer periods, or wherein activity data, behavior data or usage data indicates the requirement of a large or varied energy buffer facility. In some examples, the first energy storage component may be configured for automatic instantaneous discharge of the amount of stored energy in response to a load applied to the power transfer circuitry. The first energy storage component may, in some such examples, be enhanced (e.g., optimized) for response time over energy storage capacity, and may for example comprise one or more supercapacitors. In some examples, the second energy storage component may be configured for continued discharge during or following the discharge of stored energy from the first energy storage component. The second energy storage component may, in some such examples, be optimized for energy storage capacity over response time. In some examples, the second energy storage component may comprise one or more batteries.

As described herein, the energy buffer may provide an energy buffer against any suitable power transfer interruption, such as a loss of power to the ground assembly from an electrical grid. In some examples, the automatic discharge may be caused based on the loss of power to the ground assembly. In some examples, the loss of power may be an electrical grid power outage in a geographical region of the ground assembly.

The load receiving the automatic discharge of stored energy in the energy buffer may be any suitable load as described herein, and may in some examples be based on an operational mode of the power transfer circuitry of the ground assembly. In some examples, the automatic discharge of the amount of stored energy is to one or more selected from: one or more electric vehicle batteries, such as the energy storage device of the electric vehicle; an electrical grid; electrical circuitry of a home, place of work, or any suitable facility.

In some examples, the ground assembly may further comprise a control circuitry configured to control or regulate the automatic discharge. The control circuitry may comprise any suitable circuitry configured to control the automatic discharge of the amount of energy from the energy buffer, for example to one or more loads as described herein, and may in some examples be configured to transmit one or more control signals to one or more corresponding switching components of the energy buffer to control the automatic discharge.

The amount of stored energy may, in some examples, be discharged in response to a condition in which the energy buffer is no longer required, for example if the source of possible power transfer interruptions (such as an electrical grid responsible for power drops or power outages) is not the source for providing the power transfer. This may be the case, for example, following the switching of a power transfer operating mode of the power transfer circuitry of the ground assembly to vehicle-to-grid (V2G) mode. This may also be the case, for example, where an electric vehicle is no longer being charged by way of a grid-to-vehicle (G2V) operating mode of the power transfer circuitry, such as when the vehicle moves away from the ground assembly. In some such examples, the amount of stored energy of the energy buffer may be discharged to an energy receiver for any suitable alternate use, for example as a contribution to the electrical grid or as energy for powering a home. In some examples, the power transfer circuitry may be configured to operate in a vehicle-to-grid (V2G) mode, wherein during operation in the V2G mode, the energy buffer is configured to discharge the amount of stored energy to an electrical grid. In some examples the electrical grid may the cause of loss of power to the ground assembly and therefore the reason for requiring the stored energy of the energy buffer. During the V2G operating mode, a grid power outage would be less likely to cause transient events at the power transfer circuitry of the ground assembly and as such the stored energy of the energy buffer is less critical. The energy stored at the energy buffer may therefore be discharged, for example to the grid or any suitable receiver, for alternate use. In some examples, the discharge of the amount of stored energy to the energy receiver may comprise the receipt, at the ground assembly (such as at a processor thereof) of a communication by way of the energy receiver. The communication may, in some examples, comprise an acknowledgement of the discharge. In some examples, based on the acknowledgement, the ground assembly (such as a processing device thereof) may be configured to disengage one or more components of the ground assembly from the power receiver. Following the acknowledgment, therefore, the ground assembly may be configured to isolate the circuitry thereof from any potential effects of ongoing power events associated with the power receiver, such as a power drop or power outage. In some examples, the acknowledgement may be based on one or more contract terms associated with the discharge.

It will be appreciated that in some examples, a single ground assembly may comprise more than one power transfer circuitry, each power transfer circuitry configured for providing wireless power transfer by way of a corresponding electric vehicle. Each power transfer circuitry may be comprised within a corresponding ground unit of the ground assembly. Examples will be appreciated wherein multiple ground units are supported by a single energy buffer. In some examples therefore, the ground assembly may comprise: a plurality of ground units, each ground unit comprising a corresponding power transfer circuitry; and a single energy buffer configured to discharge the amount of stored energy by way of the power transfer circuitry of each ground unit of the plurality of ground units. It will be appreciated that any group of two or more of the plurality of ground units may be supported by a corresponding energy buffer. In some examples, each one of the plurality of ground units may be supported by a corresponding energy buffer. In some examples therefore, the ground assembly may comprise: a plurality of ground units, each ground unit comprising a corresponding power transfer circuitry and a corresponding energy buffer configured to discharge the amount of stored energy by way of the power transfer circuitry of the corresponding ground unit of the plurality of ground units.

In some examples, the storage of the amount of energy at the energy buffer may be prioritized over wireless power transfer to the energy storage device of the electric vehicle. In some examples, at least a portion of the second power transfer is transferred from the energy storage device of the electric vehicle. For example, an electric vehicle may arrive at a ground assembly partially charged. Activity or usage data, or indeed the receipt of input instructions from a user, may indicate that the second power transfer should be prioritized over the first power transfer. In some such examples, the electric vehicle battery may be used to provide at least a portion of the second power transfer for storing the amount of energy at the energy buffer. Following completion of the storing of the amount of energy at the energy buffer, and for example following receipt of an acknowledgment associated therewith, the ground assembly may be configured to direct all power transfer to the electric vehicle (or any suitable load) by way of the first power transfer. In some examples, the second power transfer is performed based on a determination of an energy storage device. For example, it may first be determined, prior to performing the second power transfer, a stored energy associated with the energy storage device, for example at a state of charge of a battery of an electric vehicle. As such, in some examples, an available contribution to the second power transfer by the energy storage device may be determined. In some examples it may be determined that there is no available stored energy associated with the energy storage device, or wherein the stored energy associated with the energy storage device is below a required threshold availability, and in such examples it may be determined that the energy storage device is not configured to provide a portion of the second power transfer. In some examples, the energy storage device providing the at least a portion of the second power transfer may be determined, for example from a plurality of available energy storage devices, for example of one or more corresponding electric vehicles. In examples wherein a ground assembly comprises a plurality of ground units, more than one electric vehicle may be available to provide the at least a portion of the second power transfer. For example, the determination may be performed based on an amount of energy stored at an energy storage device (e.g., a battery) of each of the plurality of electric vehicles. In some examples, more than one energy storage device may be determined, each energy storage device providing at least a portion of the second power transfer.

In accordance with a further aspect of the present disclosure, there is provided a method for performing wireless power transfer at a ground assembly of a wireless power transfer (WPT) system, for charging an electric vehicle, the method comprising: receiving, using control circuitry, an indication of a vehicle to be charged; causing, using control circuitry, based on the indication, a first power transfer in which power is transferred to, and stored in, an energy storage device of an electric vehicle; causing, using control circuitry, based on the indication, a second power transfer in which power is transferred to, and stored in, an energy buffer of the ground assembly; and causing, based on a state of charge of the energy storage device, automatic discharge of an amount of stored energy in the energy buffer.

In some examples, the method may comprise, in response to an application of a load at the ground assembly, discharging the amount of stored energy as power to the energy storage device. In some examples, the load may be a loss of power to the ground assembly, for example a drop or power outage as described herein. In some examples, the performing of the second power transfer may be based on load information associated with a region of the ground assembly, for example data associated with grid power outages within the region as described herein.

In some examples, the method may further comprise determining that the second power transfer is complete; and based on the determination, receiving an acknowledgment of the completion. In some examples, the method may further comprise determining that the first power transfer is complete; and based on the determination, receiving an acknowledgment of the completion.

In some examples, the method may further comprise determining that the energy storage device, the electric vehicle, or a vehicle assembly thereof, is disengaged from the ground assembly; and based on the determination causing discharge of the energy buffer.

In some examples, performing the first power transfer is based on a determining that an electric vehicle assembly of the electric vehicle is in a predefined parking region of the ground assembly.

In some examples, the causing the second power transfer may comprise causing transfer of an amount of power equal to a power transfer threshold of the energy buffer. The power transfer threshold may be any suitable power transfer threshold as described herein. In some examples, the method may comprise determining the power transfer threshold, such as by any suitable control circuitry of the ground assembly. In some examples, the method may comprise measuring, detecting, determining, estimating or predicting one or more of: power outage data associated with a region of the ground assembly; power transfer data associated with the ground assembly. In some examples, the power transfer threshold is determined based on one or more of: the power outage data; the power transfer data. The power outage data may be associated with any suitable pattern or correlation in duration of power outages in a region of a ground assembly. The power transfer data may be associated with any suitable usage, activity or behavior data associated with the ground assembly, and may for example indicate an amount of power transfer taking, or expected to take place, at the ground assembly during a power outage duration, and may therefore represent a performance loss associated with a power outage. The power outage data may be specific to a region of the ground assembly, and may in some examples be configured to change over time, for example as more power outages are detected and accounted for in the power outage data. The power outage data may therefore provide a dynamic power transfer threshold, and therefore optimize an amount of energy storage in the energy buffer, which may be specific to a region local to the ground assembly and may change over time as more power outage data may be accounted for. The power transfer data may be specific to a particular ground assembly, or may be a pattern or correlation in ground assemblies within the region. The power transfer data may comprise a temporal component, for example based on time of day or day of the week, and may in some examples be used to provide a dynamic power transfer threshold, which can in some examples be specific to a ground assembly, which may optimize energy storage in the energy buffer according to the amount of power transfer performance expected to be lost for a particular power outage in a particular region.

In some examples, the method may be performed by a ground assembly in accordance with the first aspect. It will be appreciated therefore that any features described in relation to the ground assembly of the present disclosure will be suitable for use in the method of the present disclosure.

In accordance with a further aspect of the present disclosure, there is disclosed a method of determining power outage data associated with power outages within a region, and power transfer data associated with power transfer of a ground assembly of a wireless power transfer (WPT) system for charging an electric vehicle, for example in accordance with the first aspect, as described herein. In some examples, the method comprises controlling, based on the power outage data, and/or the power transfer data, storage of an amount of energy in an energy buffer of a ground assembly of a wireless power transfer (WPT) system for charging an electric vehicle, for example in accordance with the first aspect. In some examples, the method comprises automatically discharging, based on a state of charge of an energy storage device of an electric vehicle, stored energy in the energy buffer, for example in response or reaction to a power outage in the region.

In accordance with a further aspect of the present disclosure, there is provided a non-transitory storage medium having computer-readable instructions stored thereon, the computer readable instructions operable when executed by a processing device to: receive an indication of a vehicle to be charged; cause, based on the indication, a first power transfer in which power is transferred to, and stored in, an energy storage device of the electric vehicle; cause, based on the indication, a second power transfer in which power is transferred to, and stored in, an energy buffer of the ground assembly; and cause, based on a state of charge of the energy storage device, automatic discharge of an amount of stored energy in the energy buffer.

According to an aspect of the present disclosure, there is provided a vehicle assembly configured to cooperate with a ground assembly of the first aspect, for charging an electric vehicle. The vehicle assembly comprises wireless power transfer circuitry configured to engage corresponding power transfer circuitry of the ground assembly; the ground assembly further comprising an energy buffer; wherein the wireless power transfer circuitry of the vehicle assembly is configured to cause: a first power transfer in which power is transferred to, and stored in, an energy storage device of the electric vehicle; and automatic discharge of an amount of stored energy in the energy buffer to the energy storage device of the electric vehicle, based on a state of charge of the energy storage device. According to an aspect of the present disclosure, there is provided a vehicle comprising a vehicle assembly in accordance with the present disclosure.

Systems and methods of the present disclosure may also provide a region-specific understanding of electrical grid imbalances, which may in some cases result from power outages and power drops, but may in some cases result from an increase or decrease in power demand relative to a power supply, causing a power oversupply or a power deficit. A power deficit can often arise from increased demand, such as due to pressures resulting from weather events like heatwaves or cold snaps, which can dramatically raise power consumption, and may raise the consumption beyond a current grid capability. The often unpredictable nature of renewable power outputs, such as those from solar and wind sources, can also lead to sudden decreases in power production, and this can again be driven by weather changes. Various other scenarios such as unexpected plant failures, power line failures, and maintenance issues, can also act to disrupt power distribution across the grid.

Conversely, power oversupply can also occur in several scenarios, such as unexpected overproduction from renewables, particularly when wind and solar installations generate more power than needed during periods of low demand. Rapid drops in electricity usage due to changes in consumer behavior or industrial demand can also lead to overproduction, yielding excess power.

Managing these challenges requires robust strategies such as real-time demand response, and flexible power storage solutions, which might include energy storage technologies. Providing a dedicated energy solution may, however, present challenges at the required scale, particularly for large regions of high expected power consumption. It may therefore be beneficial to make use of existing energy availability where possible. In particular, as many regions push to meet green energy targets, electric vehicle (EV) ownership, and consequent installation of EV battery charging stations, is becoming more widespread. This increasingly dense EV battery charging infrastructure provides more ready access between an electrical grid and electrical power storage capacity, for example in the form of energy buffers of ground assemblies as described herein.

Due to the dual concerns of the effects of power oversupply and power deficit, in order to provide optimum grid balancing such a solution should be capable of both receiving surplus power from an electrical grid during periods of a power surplus, and of discharging power to the grid during periods of power deficit. In order for such EV charging installations to provide a suitable contributor to electrical grid balancing, there may therefore be a need for such charging installations to be configured to receive energy transfer (such as to an energy buffer thereof) from the grid, and to contribute energy transfer (such as from the energy buffer) to the grid.

Such EV charging installations may contribute to aiding grid balancing during any suitable periods and may not require for an EV to be present at the EV charging installation. For example, if the energy buffer has available storage capacity for receiving energy from the grid, such storage capacity may be used to receive energy transfer during periods of power oversupply within the electrical grid. In examples wherein the energy buffer has available stored energy for contributing to the grid, such stored energy may be discharged to the grid during periods of grid power deficit. Once the spatial and temporal power requirements for a region are understood, it may be required to understand the capabilities of the EV charging installations and the associated energy buffers, in order to ensure that appropriate demands are made of these devices during their contribution to electrical grid balancing. Such an understanding may currently require a real-time determination of spatial and temporal distribution of EV charging installations having energy buffers, along with a real-time determination of spatial and temporal distribution of the energy buffer characteristics of the energy buffers thereof. This does, however, introduce numerous parameters of importance to be considered when determining an availability of power access or storage during periods of potential grid imbalance, which can number in the millions. These parameters might for example include individual energy buffer parameters such as: state of charge; state of health; state of function; voltage; current; temperature; environmental temperature; internal resistance; fault detection and indicators of diagnostic status, among many others. When considering regions having, in some cases, millions of EV charging installations, this may introduce parameters in the order of millions or billions required for consideration of power access and storage availability. Changes in power supply and demand over time may require a close monitoring of both the spatial and temporal variability in these parameters across a region. The computational resources required for performing such continuous real-time receipt, processing and analyzing of these parameters on minute- or sub-minute time scales, in order to keep a grid balance between power generation and consumption, may be impractical.

The present disclosure therefore provides systems and methods for balancing power transfer between energy buffers of EV charging installations and an electrical grid, by way of power transfer, to manage electrical grid balancing in a region. In particular, the present systems and methods make use of prior captured power transfer data within a region to predict a power status of the region at a particular time instance, which may comprise at least one of: a power surface density of the region, a power of the region, an energy surface density of the region, or an energy of the region, at the particular time instance, which may thereby avoid the computational resource intensive, and time intensive, task of performing continuous real-time monitoring of power and power surface density, and energy and energy surface density, for the region.

In accordance with a further aspect of the present disclosure therefore, there is provided an electrical grid monitoring system for balancing power transfer between an energy buffer of a wireless power transfer (WPT) system and an electrical grid, the system comprising: a plurality of WPT systems located within a region, each WPT system comprising an energy buffer and configured to enable the wireless transfer of power between the energy buffer and one of, or both of: an electric vehicle; and the electrical grid; a memory storing a model of power transfer data obtained from the plurality of WPT systems; and a processor configured to use the model to predict, based on the power transfer data, a power status of the region at a time instance; wherein the processor is further configured to set a direction of net power transfer of the plurality of WPT systems based on the predicted power status of the region at the time instance. It will be appreciated that the energy buffer may be any suitable energy buffer as described herein, and may in some examples comprise one or more supercapacitors, one or more batteries, or any suitable combination thereof as described in relation to some examples herein. Systems and methods for balancing power transfer between an energy buffer of a wireless power transfer (WPT) system and an electrical grid in accordance with the present disclosure may therefore be provided in parallel to, or in any suitable combination with, the systems and methods for wirelessly charging an electric vehicle in accordance with other aspects of the present disclosure.

In some examples, the power transfer system may comprise a plurality of power transfer systems.

In some examples, the power transfer system comprises the processor. In some examples, the processor comprises a power transfer system-side processor element and a remote processor element. In some examples the memory comprises a power transfer system-side memory element storing a model of power transfer data obtained from the power transfer system, and optionally a remote memory element storing a model of power transfer data obtained from a plurality of said power transfer systems. In some examples the power transfer system-side processor element is configured to predict, using the model stored on the power transfer system-side memory element, and based on the respective power transfer data, a said power status of the power transfer system, for example a said power status at the time instance. In some examples, the power transfer system-side processor may be configured to communicate the power status of the power transfer system to the remote processor element, and wherein the remote processor element is configured to predict (optionally using the model stored on the remote memory element and based on the power transfer data obtained from the plurality of power transfer systems), based on the power status of the power transfer system, the power status of the region. In such examples, the remote processor element may be configured to receive the power status of the power transfer system from a plurality of said power transfer systems located within the region, and may be configured to combine the plurality of locally-determined power statuses to determine the power status of the region. In some examples the prediction of the power status of the region may therefore comprise a combination of individual power transfer system-side predictions of local power statuses, or in some examples the power transfer system-side predictions of local power statuses may be used by the remote processor element to perform a separate prediction of the power status of the region using the power transfer system-side predictions of local power statuses communicated thereto.

The term "electrical grid" refers to the interconnected network that delivers electricity from producers to consumers within a specific geographic area. Such a network can typically include power generation means, such as power stations or renewable energy sources, power transmission lines, and can include substations, and distribution lines. It will be understood that the electrical grid's primary function is to ensure a reliable and efficient supply of electricity to meet the fluctuating demand of a variety of consumers, such as residential, commercial, and industrial users, aiming to balance generation and consumption in real-time, and maintaining stable voltage and frequency levels. The electrical grid may facilitate the transport of electricity over long distances, integrating various sources of power including renewable energy sources, and typically incorporates mechanisms for monitoring, controlling, and protecting the electrical grid infrastructure. In some examples the electrical grid may be operably connected to one or more adjacent electrical grids and configured to receive electrical power from, or provide electrical power to, the adjacent grids.

It will be understood that the term "power transfer" in the context of the present disclosure refers to any suitable transfer of power from or to the energy buffer of a corresponding WPT system, and may include transfer from the energy buffer to an electrical grid, from an electrical grid to the energy buffer, or from the energy buffer direct to any suitable power consumer, such as an electric vehicle (e.g., a battery thereof) or a home. Such a process may encompasses any one or more of the components and stages involved in the power transfer, for example the conversion between alternating current (AC) of the electrical grid to direct current (DC) of the energy buffer, the regulation of voltage and the current to ensure safe and efficient transfer, and the interaction between electrical connections, whether physical or wireless, between a power transfer system and the energy buffer, along with any communication channel operating between the power transfer system and the energy buffer. A power transfer system in the context of the present disclosure is therefore any system suitable for facilitating such aspects of the power transfer process, and may be configured for either a physical or wireless connection with the energy buffer, and may be further configured for wired or wireless communication with the energy buffer.

In the context of the present disclosure, the region may be any suitable geographical area operating at least a portion of an electrical grid between power sources and power consumers as discussed herein, and may be any geographical region such as an individual property, street, block, neighborhood, town, parish, city, borough, municipality, county, province, state, country or territory.

In some examples, a power transfer system may comprise a ground assembly comprising one or more ground units, the ground assembly connected to an electrical grid. The power transfer system may further comprise a vehicle unit connected to a vehicle battery. The term "power transfer system" as used herein will be understood to mean "at least the ground assembly of the power transfer system". It will therefore be understood that the term "power transfer system" does not exclusively include the vehicle unit of a power transfer system, and may instead refer to the ground assembly (comprising one or more ground units) of the power transfer system.

The term "a memory storing a model" will be understood to be any suitable memory, or any suitable combination of memory units, accessible by the processor either locally or remotely thereto, for example by way of a remote server. In examples wherein the memory comprises a combination of more than one memory unit, each memory unit may comprise at least part of the model, which may in some cases be partitioned across multiple memory units for access by the processor, either individually or in parallel. It will be appreciated that such memory units may be local or may be distributed across remote devices in any combination thereof. The power transfer data modelled by the model may be any suitable data which indicates usage or activity of a power transfer system for the purpose of charging or discharging an energy buffer thereof, or engagement with an electric vehicle. In particular the power transfer data may be configured to indicate: one or more time instances when a power transfer system of the plurality of power transfer systems is either engaged with, or not engaged with, an electric vehicle; and a battery characteristic of the electric vehicle during the time instances. In some examples, the power transfer data may be configured to indicate: one or more time instances when an energy buffer of a power transfer system of the plurality of power transfer systems is being charged, is not being charged, or is being discharged; and an energy buffer characteristic of the energy buffer during the time instances. The model may be any suitable model, or combination of models, configured to predict a power status of the region at the time instance when modelling the power transfer data. In some examples, the model may comprise a model or multiple models, wherein the model or models may be based on any suitable publicly available and non-publicly available data such as the power transfer data described herein. In some examples, since the electrical grid infrastructure may be largely unchanged over a period of time, modeling the power transfer data (which may be any suitable data as described herein, and may include weather-related data as described) may enable the present systems and methods to predict the power status at a particular time instance to inform a direction of net power transfer of a plurality of power transfer systems in order to support grid balancing. In some embodiments, the model may be a probabilistic, stochastic or empirical model. In some examples, the model may be a machine learning model trained on the power transfer data. The machine learning model may in some examples be a probabilistic, stochastic or empirical machine learning model.

The predicted "power status" will be understood to mean any suitable predicted metric or indicator of: a state of power availability within the electrical grid of the region, and may for example comprise at least one of a metric or indicator of an amount of power provided to the electrical grid of the region, or an amount of power consumed from the electrical grid of the region, any combination thereof; or a state of energy storage within the region, and may for example comprise at least one of a metric or indicator of an amount of energy storage capacity available (such as in energy buffers of power transfer systems within the region) for accepting surplus energy, or an amount of stored energy available (such as in energy buffers of power transfer systems within the region) for provision to the electrical grid of the region, or any combination thereof. In some examples, predicting the power status of the region at the time instance may comprise predicting, based on the power transfer data, at least one of: a power surface density of the region at the time instance, a power of the region at the time instance, an energy surface density of the region at the time instance or an energy of the region at the time instance. Predicting the power of the region may in some examples comprise predicting a power of a sub-region within the region. Predicting the energy of the region may in some examples comprise predicting an energy of a sub-region within the region. Said predicting the power or the energy may be based on a power surface density or an energy surface density of the region at the time instance, respectively.

The term "power surface density", which may be otherwise referred to as "surface power density", of the region will be understood as referring to at least one of: the amount of electrical power for provision to a power receiver, for example for input into the electrical grid, from energy buffers by way of a corresponding power transfer system (for example by way of automatic discharge as described herein), per unit area within the region; or the amount of electrical power available for transfer to energy buffers from the electrical grid by way of a corresponding power transfer system, per unit area within the region. The predicted power status may, in some examples, be based on a direction of power transfer of one or more of the plurality of power transfer systems, for example a direction of power transfer of the one or more power transfer systems at the time instance. For example, when the direction of power transfer is from electrical grid to an energy buffer (G2B, for example during charging of the energy buffer), the power surface density of the region may comprise at least the amount of electrical power available for transfer to energy buffers from the electrical grid by way of a power transfer system, per unit area within the region. Contrastingly, when the direction of power transfer is from the energy buffer to a power receiver (B2X, for example the electrical grid, or the home), the power surface density of the region may comprise at least the amount of electrical power available for provision to the power receiver from energy buffers by way of a power transfer system, per unit area within the region. In some examples, when the direction of power transfer is from electrical grid to vehicle (G2V), the power surface density of the region may comprise at least the amount of electrical power available for transfer to electric vehicle batteries from the electrical grid by way of a power transfer system, per unit area within the region. Contrastingly, when the direction of power transfer is from vehicle to a power receiver (V2X, for example the electrical grid, V2G, or the home, V2H), the power surface density of the region may comprise at least the amount of electrical power available for provision to the power receiver from electric vehicle batteries by way of a power transfer system, per unit area within the region.

The power surface density may be calculated in any suitable manner, for example by integrating the power surface density at multiple areas of interest across the region at the time instance, depending on a direction of power transfer, such as in accordance with one of the following:
${P}_{B 2 X} \left(t\right) = \int {P}_{surface , B 2 X} \left(t\right) {dA}_{B 2 X} ; {P}_{G 2 B} \left(t\right) = \int {P}_{surface , G 2 B} \left(t\right) {dA}_{G 2 B} ;$
in which, P_{surface,B2X}(t) represents the power surface density of the entire region. By integrating P_{surface,B2X}(t) over the area of interest A_{B2G}, this provides a power of interest P_{B2X}(t) at the time instance, t, when the direction of net power transfer is from energy buffer to power receiver (B2X, e.g., by way of automatic discharge as described herein). P_{surface,G2B}(t) represents the power surface density of the entire region. By integrating P_{surface,G2B}(t) over the area of interest A_{G2B} we obtain a power of interest at the time instance, t, when the direction of net power transfer is from grid to energy buffer (G2B, e.g., when the energy buffer is being charged by the grid).

The power surface density may, for example, be predicted as a value of Watts per square meter (W/m²). Any suitable value or units of measurement will be appreciated. The power surface density data obtained over a period of time may be useful in training a model to predict a value or change of the power surface density in a day to day operation. For example, if data is obtained indicating a power surface density in a particular region over a time period of a year, this data may be used by a model to predict values and changes in power surface density at any particular time of the year in the future. Such data may in some example be useful in combination with weather forecast data, and may be used, for example, in predicting upcoming power surpluses or shortfalls which may require energy trading. For example, weather forecast data may be used to forecast or predict availability from renewable energy sources, which may be influenced by weather conditions. Therefore combining the information of predicted power availability with predicted renewable energy availability may in some cases aid grid balancing.

The term "energy surface density", which may otherwise be referred to as "surface energy density", of the region, will be understood as referring to at least one of: the amount of energy storage capacity, for example of energy buffers, available for receiving energy from the electrical grid by way of a power transfer system, per unit area within the region; or the amount of stored energy, for example within energy buffers, available for transfer to an energy receiver, for example the electrical grid, by way of a power transfer system, per unit area within the region. The energy surface density may, for example, be predicted as a value of Joules per square-meter (J/m2), Watt-seconds per square meter (Ws/m2), or Watt-hours per square meter (Wh/m2). Any suitable value or units of measurement will be appreciated. The predicted power status may, in some examples, be based on a direction of power transfer of one or more of the plurality of power transfer systems. For example, when the direction of power transfer is from electrical grid to an energy buffer (G2B, for example during charging of the energy buffer), the energy surface density of the region may comprise at least the amount of energy storage capacity, for example of energy buffers, available for receiving energy from the electrical grid by way of a corresponding power transfer system, per unit area within the region. Contrastingly, when the direction of power transfer is from energy buffer to a power receiver (B2X, for example the electrical grid or the home), the energy surface density of the region may comprise at least the amount of stored energy, for example within energy buffers, available for transfer to the power receiver (for example by way of automatic discharge as described herein) by way of a power transfer system, per unit area within the region. In some examples, when the direction of power transfer is from electrical grid to vehicle (G2V), the energy surface density of the region may comprise at least the amount of energy storage capacity, for example of electric vehicle batteries, available for receiving energy from the electrical grid by way of a power transfer system, per unit area within the region. Contrastingly, when the direction of power transfer is from vehicle to a power receiver (V2X, for example the electrical grid, V2G, or the home, V2H), the energy surface density of the region may comprise at least the amount of stored energy, for example within electric vehicle batteries, available for transfer to the power receiver by way of a power transfer system, per unit area within the region.

The energy surface density may be calculated in any suitable manner, for example by integrating the energy surface density at multiple areas of interest across the region at the time instance, depending on a direction of power transfer, such as in accordance with one of the following:
${E}_{B 2 X} \left(t\right) = \int {E}_{surface , B 2 X} \left(t\right) {dA}_{B 2 X} ; {E}_{G 2 B} \left(t\right) = \int {E}_{surface , G 2 B} \left(t\right) {dA}_{G 2 B} ;$
in which, E_{B2X}(t) represents the energy reservoir of the region of interest A_{B2X} at the time instance, t, when the power transfer direction is B2X; E_{G2B}(t) represents the stored energy or energy reservoir of the region of interest A_{G2B} at the time instance, t, when the direction of the power transfer is G2B; E_{surface,B2X}(t) represents the energy surface density of the entire region at a time instance, t, when the direction of net power transfer is B2X; and E_{surface,G2B}(t) represents the energy surface density of the entire region at the time instance, t, when the direction of net power transfer is G2B. The energy surface density may, for example, be predicted as a value of Joules per square-meter (J/m²), Watt-seconds per square meter (Ws/m²), or Watt-hours per square meter (Wh/m²). Any suitable value or units of measurement will be appreciated. As with the power surface density data, energy surface density data obtained over a period of time may be useful in training a model to predict a value or change of the energy surface density in a day to day operation. For example, if data is obtained indicating an energy surface density in a particular region over a time period of a year, this data may be used by a model to predict values and changes in energy surface density at any particular time of the year in the future. Such data may in some examples be useful in combination with weather forecast data, and may be used, for example, in predicting upcoming stored energy reservoir, or energy storage availability, surpluses or shortfalls which may require energy trading. For example, weather forecast data may be used to forecast or predict availability from renewable energy sources, which may be influenced by weather conditions. Therefore combining the information of predicted energy storage or stored energy availability with predicted renewable energy availability may in some cases aid grid balancing.

In the context of the present disclosure it will be understood that the "direction of net power transfer" refers to a majority power transfer direction among the, optionally plurality of, power transfer systems, which may either be from the electrical grid to the energy buffer (for example during charging of the energy buffer) (G2B) or from the energy buffer (such as during automatic discharge thereof) to any suitable power receiver (B2X, for example the electrical grid, or the home). In some examples the direction of net power transfer may be determined by detecting, for each power transfer system of the plurality of power transfer systems, a direction of power transfer. In some examples, depending on the local electrical grid topology, it could be the case that a direction of some power transfer systems is opposite to that of other power transfer systems which may affect the majority power transfer direction. As such, in some examples the direction of power transfer for individual power transfer systems of the plurality of power transfer systems may be determined. The direction of net power transfer may determine the direction of net contribution of power transfer by, or to, the energy buffer, such that energy buffer storage may be used to aid electrical grid balancing, for example during time instances wherein the electrical grid comprises, or is predicted or forecast to comprise, an electrical power surplus or an electrical power deficit. The setting of the direction of net power transfer by the processor, based on the predicted power status of the region at the time instance, may thereby cause the energy buffer to discharge energy stored therein to contribute to electrical grid balancing. The present disclosure may therefore act to leverage existing regional infrastructure changes accommodating increasing electric vehicle prevalence, such that energy buffers of electric vehicle power transfer systems may additionally contribute to electrical grid balancing in those regions. The present disclosure may therefore provide a resource efficient mode of balancing the electrical grid, without the need for large scale additional infrastructure changes, such as using dedicated power storage solutions.

The energy buffer may in some cases act as a contributor to grid balancing irrespective of whether an EV is engaged with the corresponding power transfer system, and may therefore avoid the periodicity and intermittence of EV availability at the power transfer system. In some cases wherein an EV is present, use of the vehicle battery as a source of energy availability and storage for grid balancing may also rely on a user or operator of an EV to accurately engaging the EV to the power transfer system, or remembering to connect the EV to the power transfer system, such as when the EV battery requires charging. Using the energy buffer of the power transfer system as a mode of energy availability and storage for grid balancing may avoid such user error, thereby providing a more consistent and predictable availability of energy availability and storage. The present disclosure may therefore provide one or more advantages over reliance on electric vehicle batteries for contributing to grid balancing.

In some examples the power transfer system may be configured to communicate with one or more corresponding energy buffers, and optionally with an EV or EV battery thereof, by way of any suitable communication channel, which may for example be a wireless communication channel. The power transfer system may be configured to, by way of the communication channel, receive the power transfer data from the energy buffer, the EV or the EV battery. The power transfer data may therefore comprise any data associated with the energy buffer, the EV, the EV battery, the power transfer system, the engagement of the EV, or the EV battery, with the power transfer system, or the engagement of the power transfer system with the electrical grid or any other suitable power receiver such as a home. In some examples, the power transfer data may comprise any suitable power production and power consumption data obtainable using one or more sensors configured to detect power production from one or more power providers, contribution of said power to the electrical grid, or power consumption from the grid by one or more power consumers. In some examples, the power transfer data may comprise any suitable environmental data such as temperature or weather-related data, for example in cases where power production and consumption from the electrical grid may comprise a weather dependence. In some examples, the power transfer data comprises, for each power transfer system, at least one selected from the group of: a location of the power transfer system in the region; a time at which the electric vehicle is engaged with the power transfer system; a duration for which the electric vehicle is engaged with the power transfer system; a duration of charging of the energy storage device (e.g., battery) of the electric vehicle; an energy storage device (e.g., battery) characteristic of the energy storage device of the electric vehicle; a duration of charging of the energy buffer; an energy buffer characteristic; an environmental characteristic of the power transfer system, such as for example, an environmental temperature or an environmental pressure. For example, trends or patterns, such as time-dependent trends, in such in power transfer data may be learned by the machine learning model and may for example inform on the likelihood of an energy buffer of a power transfer system having available stored energy, or energy storage capacity, for providing or receiving power transfer via the power transfer system at a particular time instance. Such modelled behavior over the plurality of power transfer systems within the region may thereby enable the processor to use the model to predict the available distribution of electrical power contribution or storage at the time instance, and therefore the power status (for example comprising a power surface density or an energy surface density) of the region at the time instance. For example, patterns or trends in when and for how long a particular energy buffer of a power transfer system comprises stored energy or energy storage capacity, along with patterns or trends in the energy capacity of the energy buffer, can aid the processor in predicting the power status of the region at the time instance.

Any suitable energy buffer characteristic will be appreciated which may indicate an ability of the energy buffer to provide or store electrical energy via the power transfer system. In some examples, the energy buffer characteristic may one or more characteristics selected from the group: an energy buffer type; an energy buffer manufacturer; an energy buffer model number; an energy buffer digital twin; an energy buffer charge method; a state of charge of the energy buffer; a state of health of the energy buffer; a state of function of the energy buffer; a capacity of the energy buffer; a voltage of the energy buffer; a current of the energy buffer; a capacitance of the energy buffer; a temperature; a pressure; an internal resistance of the energy buffer; a threshold charging current of the energy buffer; a threshold charging voltage of the energy buffer; a threshold charging impedance of the energy buffer; a threshold charging resistance of the energy buffer; a threshold charging rate of the energy buffer; a C-rate; an E-rate; an energy density of the energy buffer; a power density of the energy buffer; a cycle life of the energy buffer; a fault detection of the energy buffer; a diagnostic status of the energy buffer. It will be understood that a threshold, such as a threshold charging current, a threshold charging voltage, a threshold charging impedance, a threshold charging resistance, and a threshold charging rate, may comprise one or more of an upper threshold and a lower threshold. It will also be understood that the threshold charging rate may be any suitable charging rate, such as a threshold charging rate of current or voltage. Any time-dependent patterns in energy buffer characteristics such as energy buffer capacity and diagnostic, fault-detection, or state of health and function indicators may be learned by the machine learning model and may for example inform on the ability of the energy buffer to provide or receive power transfer via the power transfer system at a particular time instance. Modelled patterns or trends in energy buffer identification data, such as an energy buffer type, an energy buffer manufacturer, an energy buffer model number, an energy buffer charge method, or a wireless power transfer operational range may inform expectations on charging protocols and may for example increase a confidence in a determined or predicted energy buffer characteristic based on known manufacturer specifications. A received or learned digital twin of the energy buffer may additionally improve confidence in determining or predicting energy buffer characteristics. Modelled patterns or trends, or those statistically derived or deduced, in power transfer characteristics of the energy buffer such as a voltage, a current, a temperature, a pressure, an internal resistance, a threshold charging current, a threshold charging voltage, a threshold charging impedance, a threshold charging resistance, a threshold charging rate, a C-rate, an E-rate, an energy density, and a power density, may act to improve confidence in determining or predicting power transfer capability of the energy buffer at the time instance. Such modelled behavior over a plurality of energy buffers within the region may thereby enable the processor to use the model to predict more accurately the power status (for example comprising a power surface density or an energy surface density) of the region at the time instance.

In some examples, the direction of net power transfer is one selected from: electrical grid to the energy buffer (G2B) transfer wherein power is transferred from the electrical grid to the energy buffer by way of the power transfer system (for example during charging of the energy buffer); energy buffer to external power receiver (B2X) transfer wherein power is transferred from the energy buffer to an external power receiver by way of the power transfer system (for example during discharging, such as automatic discharging) of the energy buffer as described herein). As such, the power transfer system may be configured to transfer power to or from the energy buffer, wherein the transfer from the energy buffer may be to any suitable external power receiver, and may include power transfer from the energy buffer to the electrical grid (B2G), or direct to an energy consumer such as to a home (B2H). In some examples, the processor may be configured to determine an optimal manner in which to achieve electrical grid balancing, and in examples wherein the electrical grid comprises an power undersupply such that power consumption from the electrical grid is greater than power contribution, the processor may set, based on the predicted power status (for example comprising a power surface density or an energy surface density), the direction of power transfer of one or more of the plurality of power transfer systems to B2H. In such examples, energy stored in energy buffers of the present disclosure may be used for personal home energy storage for use during the periods of power undersupply or power outage, for example to reduce the effects of resultant transient effects.

The processor may in some examples be configured to determine an electrical grid oversupply or undersupply, which may be used to set the direction of power transfer in response thereto. In some examples, the system further comprises: one or more power supply sensors configured to detect an amount of power supplied to the electrical grid; and one or more power consumption sensors configured to detect an amount of power consumed from the electrical grid; and wherein the processor is further configured to determine, based on the detected amount of power supplied to the electrical grid, and the detected amount of power consumed from the electrical grid, a net power availability of the electrical grid. Examples will be appreciated wherein one or more of the power supply sensors, and one or more of the power consumption sensors, are not part of the system, but wherein the processor is configured to receive power supply data from the one or more power supply sensors and power consumption data from the one or more power consumption sensors. In such examples, the processor may be configured to determine, based on the received power supply data, an amount of power supplied to the electrical grid, and further configured to determine, based on the received power consumption data, an amount of power consumed from the electrical grid. In such examples, the processor may be configured to determine, based on the determined amount of power supplied to the electrical grid, and the determined amount of power consumed from the electrical grid, a net power availability of the electrical grid. Examples will be appreciated wherein the net power availability of the electrical grid is determined remote to the system, such as by a computing device of an operator of the electrical grid, and therefore in some examples, the processor may be configured to receive the net power availability of the electrical grid.

The term "net power availability of the electrical grid" will be understood as referring to the approximate difference between the amount of power supplied to the electrical grid, for example by electrical power generators such as power plants or renewable energy sources, and the amount of power consumed from the electrical grid, for example by industrial, commercial and residential power consumers. In order to maintain grid balancing, the net power availability of the grid may be maintained at or approximately zero, such that all power contributed to the grid by power generators is consumed by power consumers. In instances wherein the net power availability of the grid is non-zero, the resulting grid power surplus or grid power deficit may lead to grid imbalance. The determination or receipt of the net grid power availability may enable any surplus or deficit to be redistributed, for example to or from energy buffers by way of a power transfer system as described herein. The net power availability will be understood to not exceed the grid capacity. In some examples a known grid capacity may be used by the processor to determine the net power availability of the grid. In some examples, the processor may receive, or determine based on the known grid capacity, a threshold minimum power availability, which may in some examples define a minimum net grid power availability beyond which the processor is configured to set the direction of net power transfer of power transfer systems within the plurality of power transfer systems to V2X, for example V2G.

In some examples, when the net grid power availability is positive, the processor may be configured to set the direction of power transfer of at least one of the plurality of power transfer systems to G2V. As such, when the electrical grid experiences an electrical power oversupply such that power generation is greater than power consumption, the machine learning model may be used by the processor to predict the availability of energy storage capacity within energy buffers, for example using the predicted energy surface density, the predicted storage energy, and therefore the predicted energy storage capacity, may then be allocated to receive surplus power from the electrical grid by way of the corresponding power transfer system. In some examples, when the net grid power availability is negative, the processor may be configured to set the direction of power transfer of at least one of the plurality of power transfer systems to B2X, for example to B2G. As such, when the electrical grid experiences an electrical power undersupply such that power generation is less than power consumption, the machine learning model may be used by the processor to predict the availability of stored energy within energy buffers, for example using the predicted energy surface density, the predicted stored energy may then be allocated for transfer directly to an electrical power consumer such as a home, or to the electrical grid, by way of the corresponding power transfer system.

In some examples, the setting of the direction of net power transfer of at least one of the plurality of power transfer systems by the processor may further comprise detecting that the power transfer system of the plurality of power transfer systems is configured for control by the processor. In some examples, the detection may comprise identifying a control authorization of a power transfer system of the plurality of power transfer systems. In some examples the control authorization may be selectable by a control authorization selector, the control authorization selector comprising at least one of: an operator of a vehicle; an operator of the power transfer system; an operator of the electrical grid monitoring system. In some examples, the setting of the direction of power transfer by the processor may further comprise, in response to detecting the control authorization, setting the direction of power transfer according to a predefined power transfer contract. In some examples, the control authorization selector, for example an operator or user of a vehicle or a power transfer system, may opt-in for permitting control of the direction of power transfer of the power transfer system by the processor. The selectable (for example user-selectable) control authorization may, for example, be selected by way of an energy trading platform, setting terms of a contract between the control authorization selector and a power transfer provider or receiver (for example an electrical grid operator), for the setting of the direction of power transfer. The predefined power transfer contract may therefore determine further communications in response to the setting of the net power transfer direction, for example associated with a transaction between the control authorization selector (for example the user or operator of the vehicle or power transfer system) and the power transfer provider or receiver (for example the electrical grid operator).

In some examples, the setting of the direction of net power transfer of at least one of the plurality of power transfer systems by the processor may further comprise determining or detecting, by the processor, one or more energy buffer characteristics of an energy buffer of the at least one power transfer system. In some examples, the energy buffer characteristic may be an available energy buffer capacity or a stored energy of the energy buffer, wherein the processor may be configured to set the direction of power transfer only when a specific threshold of the energy buffer characteristic is met, such as a threshold energy buffer capacity or a threshold stored energy of the energy buffer. In such examples therefore, the processor may be configured to set the direction of power transfer to make use of an energy buffer for G2B power transfer when the energy buffer capacity threshold is met, or for B2X power transfer when the stored energy threshold of the energy buffer is met. In some examples, the threshold of the energy buffer characteristic may be selectable by an operator of one or more of: the vehicle; the power transfer system; the electrical grid. In some examples, the threshold of the energy buffer characteristic may be selectable by a manufacturer of one or more of: the energy buffer; the vehicle; the vehicle battery; the power transfer system. In some examples, power transfer systems in the region, or a subregion thereof, may be ranked by the processor based on the detected or determined energy buffer characteristic, wherein the setting of the direction of power transfer by the processor is performed based on said ranking. In such examples, power transfer systems comprising energy buffers having higher capacity or stored energy may be prioritized over those with lower capacity or stored energy. Any suitable energy buffer characteristic will be appreciated as suitable for use in setting the direction of power transfer by the processor. For example, the energy buffer characteristic may include a frequency-of-use metric defining the number of time instances, or the duration, in which the power transfer system or energy buffer has been engaged for power transfer to or from the grid, for example in a predefined time period (such as per day, per week, or per month). In such examples the processor may distribute engagement with energy buffers or power transfer systems to minimize overuse of any one energy buffer or power transfer system. In some examples, the energy buffer characteristic may include a location defining the location of the power transfer system within the region. In such examples the processor may prioritize engagement with energy buffers or power transfer systems within a proximity or threshold distance from an identified power oversupply or undersupply of the electrical grid. The processor may in some examples use the location to determine one or more locations of frequent undersupply or frequent oversupply. In such examples the processor may be configured to indicate weaknesses in the electrical grid, and may inform on any improvements to electrical power distribution within the region or on locations where the electrical grid may be extended or improved. In some examples, the processor may be configured to, using the model, determine a predicted energy buffer health indication based on the determined or detected one or more energy buffer characteristics of the energy buffer. The processor may be further configured to output the energy buffer health indication, for example to a user device of a user of the power transfer system. The model may, in addition to predicting the power status (for example comprising a power surface density or an energy surface density) of a region, make use of the power transfer data to determine a energy buffer health indicator of an energy buffer. The model may therefore, based on the power transfer data modelled, act as an early identifier of, for example, a energy buffer fault, a energy buffer anomaly or poor energy buffer health and as such the present systems and methods may be incorporated into a predictive management system for power transfer systems within the region. Anomaly behavior of individual energy buffers may be detected by statistically predicting the individual energy buffer behavior, for example by using the model of power transfer data of similar energy buffers over time. Such a predictive management system may act to inform the energy buffer owner, the power transfer system manufacturer or the energy buffer-manufacturer of energy buffer events, such as a predicted upcoming maintenance, a predicted upcoming repair, or a predicted upcoming failure.

The processor may be configured to use the model to predict the power status (for example comprising a power surface density or an energy surface density) of the region at the time instance in order to determine a predicted maximum amount of energy storage available in the region at the time instance, the energy storage in the form of energy buffer capacity or storage. The predicted maximum amount of energy storage may be configured to accommodate an oversupply of power within or provided to the electrical grid, as described herein. In some examples therefore, the prediction of the power status (for example comprising a power surface density or an energy surface density) of the region at the time instance, based on the power transfer data, further comprises predicting an oversupply threshold, the oversupply threshold comprising a predicted maximum amount of available energy buffer capacity to receive the G2B power transfer at the time instance.

The processor may be configured to use the model to predict the power status (for example comprising a power surface density or an energy surface density) of the region at the time instance in order to determine a predicted maximum amount of stored energy available in the region at the time instance, the stored energy stored within the energy buffers. The predicted maximum amount of stored energy may be configured to be transferred from the energy buffers to counteract an undersupply of power provided to the electrical grid as described herein. In some examples therefore, the prediction of the power status (for example comprising a power surface density or an energy surface density) of the region at the time instance based on the power transfer data further comprises predicting an undersupply threshold, the undersupply threshold comprising a predicted maximum amount of available stored energy buffer energy to provide the B2X power transfer at the time instance.

Since the model is of statistical nature, the predicted oversupply threshold and the predicted undersupply threshold for the region at the time instance may each be a prediction of the maximum power storage or maximum stored power, respectively, on a confidence interval. A range of values for net power availability of the electrical grid between the oversupply and undersupply thresholds may be considered to be predictable by the model in accordance with the confidence interval (for example with a probability of 80%), such that when the net power availability within the region at the time instance is observed between the oversupply and undersupply thresholds, no real-time computation of a power status (for example comprising a power surface density or an energy surface density) of the region at the time instance may be required. In some examples, when the net power availability of the electrical grid approaches or exceeds the confidence interval of the oversupply or undersupply thresholds, it may be deemed necessary to perform a real-time computation of a power status (for example comprising a power surface density or an energy surface density)for the region at the time instance in place of, or to validate or support, the predicted power status. In some examples therefore, the processor may be further configured to detect that the net grid power availability is above a predefined confidence interval of the oversupply threshold, or below a predefined confidence interval of the undersupply threshold; and wherein the processor is further configured to, in response to the detection, calculate a real-time power status (for example comprising a power surface density or an energy surface density) of the region at the time instance. Such real-time computation may in some examples be computational resource and time intensive such that when the net power availability of the electrical grid does not exceed the predefined confidence interval of the oversupply threshold or the undersupply threshold, a predicted power status (for example comprising a power surface density or an energy surface density) is preferred.

In some examples, the setting of the direction of power transfer by the processor may be based on a known or determined grid capacity of the electrical grid, wherein the processor may be configured to set the direction of power transfer such that an amount (for example predicted by the processor) of B2X, such as B2G, power transfer is performed within the constraints of the known or determined grid capacity. In such examples, the grid capacity may inform the processor in setting the direction of power transfer of power transfer systems such that the B2G power transfer from the number of power transfer systems engaged in this manner does not exceed the grid capacity.

In some examples in which the net power availability of the electrical grid is observed to be within or greater than the predicted maximum energy storage availability of the region at the time instance, in accordance with the confidence interval of the oversupply threshold, the processor may be configured to identify external power receivers which may be configured to receive the oversupply of power. For example, in cases wherein the electrical grid of the region is operably connected to one or more adjacent electrical grids and configured to provide electrical power thereto, the processor may be configured to, in response to determining that the net power availability of the electrical grid is observed to be within or greater than the predicted maximum energy storage availability of the region at the time instance, configure the electrical grid for providing the oversupply of power to the adjacent electrical grid. In some examples therefore, the processor is further configured to, in response to the detection that the net grid power availability is above the predefined confidence interval of the oversupply threshold: identify one or more electrical power receivers that are external to the electrical grid, and configured to receive power from the electrical grid; and configure the electrical grid to provide an amount of power to the one or more electrical power receivers. It will be understood that the amount of power provided is such that the net grid power availability after the provision is less than the net grid power availability before the provision. In some examples the amount of power is such that the net grid power availability after the provision is approximately zero.

In some examples, the plurality of power transfer systems are located in a first region, and wherein the one or more electrical power receivers comprise an electrical grid of a second region. The second region may comprise a plurality of power transfer systems located within the second region, each power transfer system configured to enable the transfer of power between an energy buffer and the electrical grid of the second region. The model may model power transfer data obtained from the plurality of power transfer systems of the second region, or a second model may be stored or received for storage, either on the memory or at a second memory, the second model modelling the power transfer data obtained from the plurality of power transfer systems of the second region. The processor may be further configured to use the model, or the second model, to predict, based on the power transfer data, a power status (for example comprising a power surface density or an energy surface density) of the second region at a time instance. Examples will be appreciated wherein the processor may receive the predicted power status of the second region at the time instance for processing, for example if the predicted power status of the second region is predicted remotely to the processor. The processor may in some examples be further configured to set a direction of net power transfer of at least one of the plurality of power transfer systems of the second region based on the predicted power status of the second region at the time instance. It will therefore be appreciated that adjacent regions having corresponding electrical grids may comprise dedicated systems in accordance with the present disclosure. Other examples will be appreciated wherein adjacent regions having corresponding electrical grids may comprise a single system of the present disclosure.

The processor may, in such examples, determine that the electrical grid of the second region is configured for receiving the surplus power from the electrical grid of the first region. In some such examples, the identifying of the one or more electrical power receivers is further in response to a detection that the net grid power availability of the electrical grid of the second region is negative, for example wherein power consumption from the electrical grid of the second region is greater than power generation within the second region. In some examples, the identifying of the one or more electrical power receivers is further in response to a detection that the net grid power availability of the electrical grid of the second region is below the predefined confidence interval of the undersupply threshold. The detection may be performed by the processor, or remote to the processor, for example by a processor of a system of the second region.

In some examples in which the net power availability of the electrical grid is observed to be less than the predicted maximum battery power availability of the region at the time instance, in accordance with the confidence interval of the undersupply threshold, the processor may be configured to identify external power providers which may be configured to provide the undersupply of power. For example, in cases wherein the electrical grid of the region is operably connected to one or more adjacent electrical grids and configured to receive electrical power therefrom, the processor may be configured to, in response to determining that the net power availability of the electrical grid is observed to be less than the predicted maximum battery power and energy availability of the region at the time instance, configure the electrical grid for receiving the undersupply of power from the adjacent electrical grid. In some examples therefore, the processor may be further configured to, in response to the detection that the net grid power availability is below a predefined confidence interval of the undersupply threshold: identify one or more electrical power providers that are external to the electrical grid, and configured to provide power to the electrical grid; and configure the electrical grid to receive an amount of power from the one or more electrical power providers. It will be understood that the amount of power received is such that the net grid power availability after the receipt is greater than the net grid power availability before the provision. In some examples the amount of power is such that the net grid power availability after the receipt is approximately zero.

In some examples, the plurality of power transfer systems are located in a first region, and wherein the one or more electrical power providers comprise an electrical grid of a second region. It will be appreciated that, as described herein, adjacent regions having corresponding electrical grids may comprise dedicated systems in accordance with the present disclosure or a single system of the present disclosure.

The processor may, in such examples, determine that the electrical grid of the first region is configured for receiving the undersupply of power from the electrical grid of the second region. In some such examples, the identifying of the one or more electrical power receivers is further in response to a detection that the net grid power availability of the electrical grid of the second region is positive, for example wherein power generation within the second region is greater than power consumption from the electrical grid of the second region. In some examples, the identifying of the one or more electrical power providers is further in response to a detection that the net grid power availability of the electrical grid of the second region is above the predefined confidence interval of the oversupply threshold. The detection may be performed by the processor, or remote to the processor, for example by a processor of a system of the second region. Therefore, in some examples, systems and methods of the present disclosure may facilitate transfer of power between electrical grids of adjacent regions based on the corresponding net power availability of the regions, optionally based on predicted undersupply or oversupply thresholds of the regions.

In accordance with a further aspect of the present disclosure, there is provided a method for balancing power transfer between energy buffers of power transfer systems and an electrical grid, the method comprising: receiving from a first sensor, a power consumption value indicating an amount of power consumed from the electrical grid of a region; receiving from a second sensor, a power generation value indicating an amount of power provided to the electrical grid of the region; calculating, using the power consumption value and the power generation value, a net grid power availability of the region; predicting, using a model of power transfer data from a plurality of power transfer systems distributed within the region, a power status (for example comprising a power surface density or an energy surface density) of the region; and controlling, based on the predicted power status of the region, a direction of power transfer of at least one of the plurality of power transfer systems.

In some examples wherein the model is a machine learning model (for example a probabilistic machine learning model), the method further comprises: training, using the power transfer data, the machine learning model to predict, based on the power transfer data, a power status (for example comprising a power surface density or an energy surface density) of the region at a corresponding time instance.

It will be appreciated that in some examples, the method may be performed using any suitable system of the present disclosure, and any features described herein as suitable for incorporation into the present systems will be understood as being suitable for incorporation into the method.

In accordance with a further aspect of the present disclosure, there is provided a method for balancing power transfer between energy buffers and an electrical grid, the method comprising: receiving power transfer data from a plurality of power transfer systems distributed within a region, the power transfer data indicating an energy buffer of the power transfer system for permitting power transfer between the energy buffer and the electrical grid, and time data associated with the energy buffer; and training, using the power transfer data, a machine learning model (for example a probabilistic machine learning model) to predict, based on the power transfer data, a power status (for example comprising a power surface density or an energy surface density) of the region at a corresponding time instance.

In accordance with a further aspect of the present disclosure, there is provided a non-transitory computer readable storage medium comprising computer-executable instructions stored thereon, the computer executable instructions configured, when executed by a processor, to: receive from a first sensor, a power consumption value indicating an amount of power consumed from the electrical grid of a region; receive from a second sensor, a power generation value indicating an amount of power provided to the electrical grid of the region; calculate, using the power consumption value and the power generation value, a net grid power and energy availability of the region; predict, using a model of power transfer data from a plurality of power transfer systems distributed within the region, a power status (for example comprising a power surface density or an energy surface density) of the region; and control, based on the predicted power status of the region, a direction of power transfer of at least one of the plurality of power transfer systems.

In some examples, the computer-executable instructions may be configured, when executed by the processor, to perform any of steps performable by a system or method described herein.

In accordance with a further aspect of the present disclosure, there is provided an energy trading system, the system comprising: a plurality of power transfer systems located within the region, each power transfer system configured to enable the transfer of power between an energy buffer of a power transfer system and the electrical grid; memory storing a model of power transfer data obtained from the plurality of power transfer systems; and a processor configured to use the model to predict, based on the power transfer data, a power status (for example comprising a power surface density or an energy surface density) of the region at a time instance; wherein the processor is further configured to: determine, based on a control authorization, that at least one power transfer system of the plurality of power transfer systems is configured for control by the processor; receive, from the at least one power transfer system, a predefined power transfer contract; and set, based on the predefined power transfer contract, a direction of net power transfer of the at least one power transfer system. The setting of the direction of net power transfer of the at least one power transfer systems may, in some examples, be based on the predicted power status of the region at the time instance. In some examples, the control authorization may be selectable by a control authorization selector, the control authorization selector comprising at least one of: an operator of a vehicle; an operator of the power transfer system; an operator of the electrical grid monitoring system. In some examples, the control authorization selector, for example an operator or user of a vehicle or a power transfer system, may opt-in for permitting control of the direction of power transfer of the power transfer system by the processor. The selectable (for example user-selectable) control authorization may, for example, be selected by way of an energy trading platform, setting terms of the contract between the control authorization selector and a power transfer provider or receiver (for example an electrical grid operator), for the setting of the direction of power transfer. The predefined power transfer contract may therefore determine further communications in response to the setting of the net power transfer direction, for example associated with a transaction between the control authorization selector (for example the user or operator of the vehicle or power transfer system) and the power transfer provider or receiver (for example the electrical grid operator).

In accordance with a further aspect of the present disclosure, there is provided an energy buffer management system for monitoring energy buffer health of power transfer systems, the system comprising: a plurality of power transfer systems located within a region, each power transfer system comprising an energy buffer and configured to enable the transfer of power between the energy buffer and one or more of: i. an electric vehicle (for example a battery thereof); and ii. the electrical grid; a memory storing a model of power transfer data obtained from the plurality of power transfer systems; and a processor configured to use the model to predict, based on the power transfer data, an energy buffer health indicator of the energy buffer of a power transfer system of the plurality of power transfer systems, at a time instance; wherein the processor is further configured to output the energy buffer health indicator. In some examples the energy buffer health indicator may be output to a user device of a user of the power transfer system. In some examples, the energy buffer health indicator may indicate one or more selected from: a predicted energy buffer anomaly; a predicted energy buffer fault; a predicted energy buffer repair; a predicted energy buffer service. Any suitable energy buffer health indicator will be appreciated which may indicate an ability of the energy buffer to continue to provide or receive power transfer by way of the power transfer system.

It will be appreciated that any features described herein as suitable for incorporated into one or more aspects or examples of the present disclosure are intended to be generalizable across any and all aspects and examples of the present disclosure.

### BRIEF DESCRIPTION OF THE DRAWINGS

FIG. 1 illustrates an example parking facility with multiple wireless charging stations for use by electric vehicles in accordance with systems and methods of the present disclosure;
FIG. 2 is a hierarchical block diagram of an example wireless power transfer system for wireless electric vehicle charging, suitable for use in accordance with systems and methods of the present disclosure;
FIG. 3A shows an example parking space and a parking scenario illustrating a positional relationship between a vehicle and a wireless charging station in a ground-based coordinate system, suitable for use in accordance with systems and methods of the present disclosure;
FIG. 3B shows an example parking space and a parking scenario illustrating a positional relationship between a wireless charging station and a vehicle in a vehicle-based coordinate system, suitable for use in accordance with systems and methods of the present disclosure;
FIG. 4 shows a multiple parking space facility providing a plurality of wireless charging stations illustrating an example parking scenario with a vehicle, suitable for use in accordance with systems and methods of the present disclosure;
FIG. 5 shows an example wireless vehicle charging system in accordance with the present disclosure, implementing a region-specific energy storage threshold;
FIG. 6 shows a plot depicting data points obtained relating to power outage data of the region of the system of FIG. 5 for the purpose of determining a region-specific energy storage threshold, each data point of the plot representing a power outage recovery time and a corresponding power transfer performance loss metric, with the intensity of shading of the data points representing a frequency of observation;
FIG. 7A depicts a map of the region of the system of FIG. 5;
FIG. 7B and FIG, 7C each depict the distribution of systems such as the example of FIG. 5, for use in determining a region-specific energy storage threshold in accordance with the present disclosure;
FIG. 8 shows an example electrical grid monitoring system for balancing power transfer between energy buffers of power transfer systems, and an electrical grid of a region, in accordance with the present disclosure;
FIG. 9A shows a chart depicting electrical grid sensor data indicating continuous power supply to the grid over time by power plants within a region, for use in determining a net grid power availability in accordance with the present disclosure;
FIG. 9B shows a chart depicting electrical grid sensor data indicating fluctuating power supply to the grid over time by renewable power sources within the region, for use in determining a net grid power availability in accordance with the present disclosure;
FIG. 9C shows a chart depicting electrical grid sensor data indicating fluctuating power consumption from the grid over time by residential, commercial and industrial power consumers, for use in determining a net grid power availability in accordance with the present disclosure;
FIG. 9D shows a chart depicting a net grid power availability over a time period within the region, determined using the power generation and power consumption data of FIG. 9A-9C, together with predicted oversupply and undersupply thresholds determined in accordance with the present disclosure;
FIG. 9E shows a chart depicting stored energy and energy storage availability of energy buffers of power transfer systems distributed within the region of FIG. 9A to FIG. 9D over the time period depicted in FIG. 9D, the stored energy available for transfer to the grid or the power consumers by way of the corresponding power transfer systems, and the energy storage available to receive energy from the grid by way of the corresponding power transfer systems;
FIG. 10A depicts a map view of the region of Switzerland, and FIG. 10B depicts a sequence of power surface densities for each of two directions of power transfer (B2X and G2B), predicted for the region of FIG. 10A at time instances throughout the day using power transfer data in accordance with the present disclosure;
FIG. 10C depicts a surplus of stored energy of energy buffers distributed within a region at a time instance alongside a predicted energy deficit of the region at the time instance, for use of the energy buffers to compensate the deficit in accordance with the present disclosure;
FIG. 11A depicts a block diagram representing components of an illustrative example of an energy buffer suitable for use in accordance with the present disclosure, the energy buffer comprising a supercapacitor bank;
FIG. 11B depicts a block diagram representing components of a further illustrative example of an energy buffer similar to the example shown in FIG. 11A suitable for use in accordance with the present disclosure, the energy buffer comprising a combination of a supercapacitor bank and a battery bank;
FIG. 12 shows steps of an illustrative example method for performing wireless power transfer at a ground assembly of a wireless power transfer (WPT) system in accordance with the present disclosure; and
FIG. 13 shows steps of a further illustrative example method for performing wireless power transfer at a ground assembly of a wireless power transfer (WPT) system in accordance with the present disclosure.

### DETAILED DESCRIPTION

Wireless inductive charging of electric vehicles (EV) may provide numerous benefits such as improved convenience, safety, and reliability. It eliminates cabling that is often impedimental for pedestrians and prone for wear out, vandalism, and pollution. It can preserve urban aesthetics without compromising functionality and provide a suitable solution for autonomous parking. It may increase availability of parked vehicles for vehicle-to-grid (V2G) power transfer e.g., to stabilize the electricity grid as the demand for fluctuating renewable energy increases. In the context of the present disclosure an EV may be any appropriate type of vehicle, such as a car, a motorcycle, a golf cart, a scooter, a marine vessel, an aircraft, etc. Further, the term "EV" is understood to include any type of EV, such as a battery electric vehicle (BEV), a hybrid electric vehicle (HEV), a plug-in hybrid electric vehicle (PHEV), a fuel cell electric vehicle (FCEV). Generally, the charging referred to herein is in relation to a traction battery of an EV, e.g., a battery configured to supply power to an electrified powertrain of the EV. However, where technically feasible, the disclosure extends (alternatively or additionally) to charging an ancillary battery of a vehicle, e.g., a battery of a vehicle configured to power an ancillary system or peripheral device of a vehicle, such as a power take-off device of a vehicle.

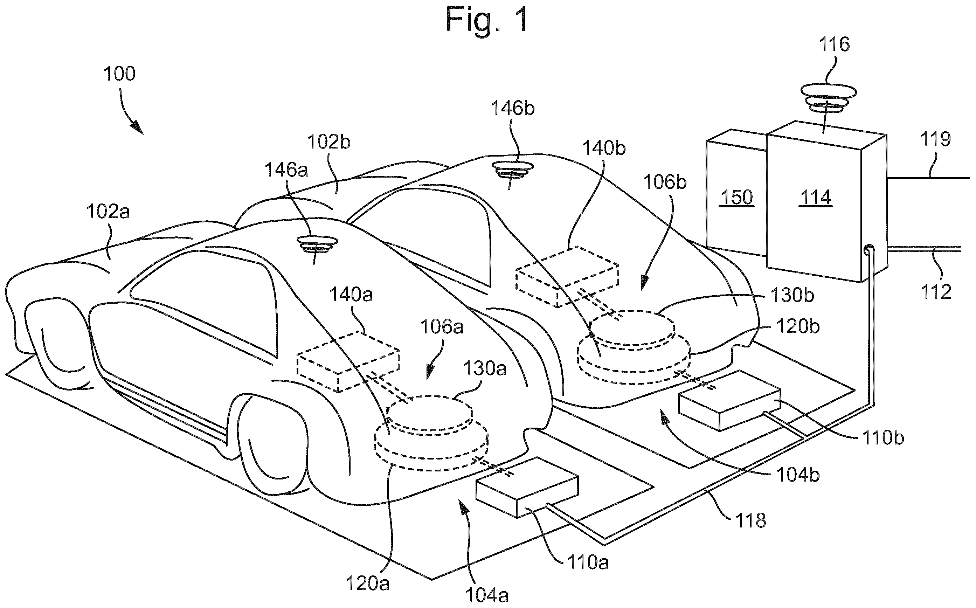

FIG. 1 illustrates an example of a parking facility 100 providing wireless charging services. Two wireless charging-enabled vehicles, 102a, 102b integrating WPT vehicle units 130a, 130b are each parked over a WPT ground unit, 120a, 120b. Both vehicle unit and ground unit include a WPT coil (not shown) sometimes also referred to as an induction coil configured to wirelessly transfer power based on the Faraday induction principle. Both vehicle unit and ground unit are part of a vehicle assembly (VA) and a ground assembly (GA) respectively, which also include respective portions of a position detection system as described herein. In some implementations, the ground units are surface mounted on the ground or the floor of a parking facility. In other implementations, the ground units are flush mounted in the floor or buried in the ground (e.g., in the asphalt).

In the example shown in FIG. 1, the power converters 110a, 110b convert power received by WPT vehicle units 130a, 130b to a form suitable for charging the vehicle's traction battery (not shown). In some examples and as described in U.S. Patent US 9,561,730 B2, the power converters 140a, 140b may be integrated with power converters used for plug-in charging of the vehicle, commonly called on-board chargers (OBC), or other on-board vehicle components. The WPT ground units 120a, 120b are shown linked to external power converters 110a, 110b, each connected to a power supply bus 118. In some implementations, the power converters 110a, 110b are configured and mounted as a "wall box". In other implementations, the power converters or parts thereof are integrated into the WPT ground units. The power supply bus 118 is in turn connected to a central power distribution unit 114 which comprises an energy buffer safety unit (EBSU) 150 comprising an energy buffer, which in the example described comprises a plurality of supercapacitors (not shown) configured to receive electrical energy for storage and further configured to discharge the stored energy as described herein. In some implementations and operations, the central power distribution unit receives power from a power utility 112 sometimes referred to as "power grid" and provides DC power to the bus 118, and the power converters 110a, 110b are inverters, such as the multi-level inverter described in U.S. Patent Application 18/486,830, filed October 13, 2023, and incorporated here by reference. The power converters 110a, 110b, provide low-frequency (LF) power signals, such as the 85 kHz signals used for WPT according to the SAE J2954 standard, to the WPT ground units 120a, 120b, to turn into LF magnetic fields for WPT. In other examples, the power distribution unit 114 provides the LF signals directly to each WPT ground unit, and power converters 110a, 110b are simpler or not present.

In yet other examples, the power distribution unit 114 and bus 118 are not present, and the power converters 110a, 110b are each connected directly to the power utility 112 and convert AC power from the utility to LF power for wireless power transfer. The combination of a WPT ground unit (e.g., 120a), a power converter (e.g., 110a), and any other ground-side electronics (not shown) constitutes a wireless charging station (e.g., 104a) as indicated in FIG. 1. In some cases, the WPT ground units 120a, 120b are also referred to as Ground Assembly Resonators (GAR) or ground assembly pads, and the wireless charging station is also referred to as a Ground Assembly (GA) or Electric Vehicle Supply Equipment (EVSE). Analogously, the WPT vehicle units 130a, 130b are sometimes referred to as Vehicle Assembly Resonators (VAR) or vehicle assembly pads and the combination of a WPT vehicle unit (e.g., 130a) and a power converter (e.g., 140a) and any other vehicle-side electronics (not shown) constitutes a Vehicle Assembly (VA) (e.g., 106a). Each of the power connections shown may be bidirectional, allowing the vehicles to discharge power from their batteries to the power utility 112 in a vehicle-to-grid (V2G), or other load in a vehicle-to-home (V2H), vehicle-to-vehicle (V2V) or similar arrangement (generally V2X).

FIG. 1 illustrates vehicles 102a, 102b, and power distribution unit 114 providing wireless communication units 146a, 146b, and 116, respectively. The wireless communication unit 116 may be configured to wirelessly communicate with the vehicles 102a and 102b e.g., based on a WiFi IEEE 802.11x standard. In SAE standard conformant wireless charging systems, this communication is used for exchanging data between the GA and VA for purposes of WPT control and safety. Further, the power distribution unit 114 provides an interface 119 configured to communicate with external entities (e.g., a charging operation center) via a communication backhaul (not shown). This backhaul may rely on radio communications (e.g., via communication unit 116), power line communications (e.g., via power utility 112), or any other line communications including fiber optic. In the example parking facility 100, wireless communication unit 116 is configured to serve multiple vehicles. In other parking facilities, each of the wireless charging stations 104a, 104b provide a wireless communication unit (not shown) configured to communicate with the respective vehicles 102a, 102b.

Beside the WPT coil, the WPT ground units 120a, 120b or the WPT vehicle units 130a, 130b, or both may include various sensors and detection systems (not shown). For example, they may include systems for detecting a positional relationship between the vehicle unit and the ground unit. The positional relationship is needed to guide the vehicle to the charging spot, to mutually align the vehicle-side and groundside WPT coils within the specified tolerance, and for pairing of a vehicle with a wireless charging station as needed to establish communication between the right entities in multiple vehicle multiple charging station scenarios. The ground unit may also include sensors and detection systems to determine presence of a foreign object that has the potential to heat up by induction heating or any hazardous events caused by an incandescent object on the surface of the ground unit. Further, it may include sensors and a detection system for determining presence of a living object e.g., a hand of a person or animals approaching a critical space beneath the vehicle where electromagnetic field exposure exceeds certain limits (e.g., based on IEEE or ICNIRP guidelines). Moreover, the ground unit may include sensors and a detection system for determining a presence of the vehicle or a type of the vehicle. In some implementations, sensors and detection systems or parts thereof may be external to the ground unit or vehicle unit.

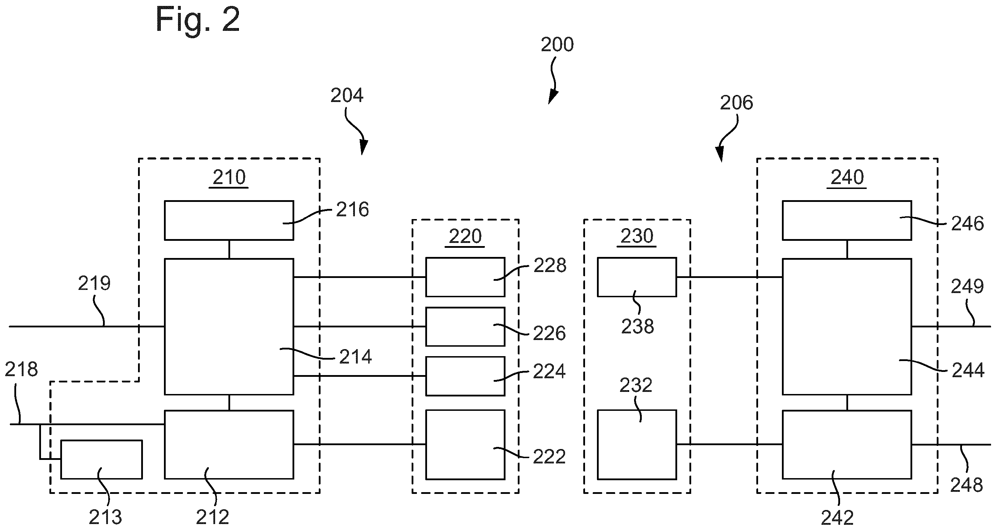

FIG. 2 is a hierarchical block diagram of an example WPT system 200 for wireless electric vehicle charging. At the top hierarchy level, the system 200 comprises a GA 204 and a VA 206 that may refer to the wireless charging station 104a and the VA 106a, respectively, of FIG. 1. The next lower level shows the GA 204 composed of a GA power conversion and control unit 210 and a WPT ground unit 220 (e.g., 120a of FIG. 1) and various connections between these blocks. Splitting the GA into two blocks implies implementations where the GA power conversion and control unit and the ground unit are physically separated (as illustrated in FIG. 1) and interconnected via a several meters long multiwire cable referred to herein as GA feeder cable (not shown). However, it should not exclude implementations where the GA power conversion and control unit is entirely or partially integrated in the ground unit forming one physical unit with a common housing (not shown).

At the third level, the GA power conversion and control unit includes a GA power converter 212 (e.g., 110a of FIG. 1), an energy buffer 213 (e.g., EBSU 150 of FIG. 1), a GA controller 214, and a GA wireless communication unit 216 (e.g., 132a of FIG. 1). The ground unit 220 integrates a GA WPT coil 222 as well as various functions as needed for Foreign Object Detection (FOD), Living Object Detection (LOD), Vehicle Detection (VD), and Position Detection (PD) as previously discussed with reference to FIG. 1. In the example of FIG. 2, these functions are provided by a FOD unit 224, a LOD unit 226, and a GA PD unit 228, each configured and connected to the GA controller for exchanging data and control. In some implementations, these functions share or partially share one common hardware platform referred to as a multi-purpose detection system.

In an implementation conforming with the SAE standard, the GA wireless communication unit 216 is a WiFi Access Point providing an air interface to a Wireless Local Area Network (WLAN) of a parking facility. Certain parking facilities (e.g., parking facility 100 of FIG. 1) provide a central WiFi access point associated to multiple GAs. In such implementations, the GA wireless communication unit 216 is external to the GA 204. In another implementation, the GA wireless communication unit is integral part of the ground unit 220.

The GA WPT coil 222 may include a tuning and impedance matching network (not shown) forming a resonant circuit and the ground-unit is referred to as the GAR as previously mentioned. In other implementations, the tuning and impedance matching network or parts thereof are included in the GA power converter 212, and optionally in the energy buffer 213. Further, the GA controller 214 interfaces to the GA power converter 212, the energy buffer 213 and the GA wireless communication unit 216 for data exchange and system control. It also provides a data interface 219 (e.g., Ethernet) to communicate with a system external entity e.g., via a backbone network as mentioned with reference to FIG. 1. Moreover, the GA power converter 212 and the energy buffer each disposes a power interface 218 for feeding or receiving AC or DC power as discussed with reference to FIG. 1.

At the second level, FIG. 2 shows the VA 206 composed of a WPT vehicle unit 230 (e.g., 106a, 106b of FIG. 1) connected to a VA power conversion and control unit 240. At a third level, the VA power conversion and control unit 240 comprises a VA power converter 242 (e.g., 110a of FIG. 1), a VA controller 244, and a VA wireless communication unit 246 (e.g., 132a of FIG. 1). The vehicle unit 230 comprises a VA WPT coil 232 and a VA PD unit 238, the vehicle-side counterpart of the GA PD unit 228 interfacing with the VA controller for data exchange and control. Splitting the VA into two blocks implies implementations where the VA power conversion and control unit and the vehicle unit are physically separated (as illustrated in FIG. 1) and interconnected via a multiwire cable referred to herein as VA feeder cable (not shown). However, this should not exclude implementations where the VA power conversion and control unit 240 is entirely or partially integrated in the vehicle unit 230 forming one physical unit with a common housing (not shown).

In a standard conforming implementation, the VA wireless communication unit 246 is a WiFi Client. As with the GA wireless communication unit, the VA wireless communication unit may be external to the VA 206 e.g., mounted anywhere on the vehicle or parts or it may be partially or fully integrated into the vehicle unit.

In some implementations, the VA WPT coil 232 includes a tuning and impedance matching network (not shown) forming a resonant circuit and the vehicle unit is referred to as the VAR as previously mentioned. Further, the VA controller interfaces to the VA power converter and the VA wireless communication unit for data exchange and control. It also provides a line communication interface 249, e.g., a CAN bus interface to communicate with an external vehicle onboard entity. Moreover, the VA power converter disposes a power interface 248 for feeding or receiving DC power as previously discussed with reference to FIG. 1.

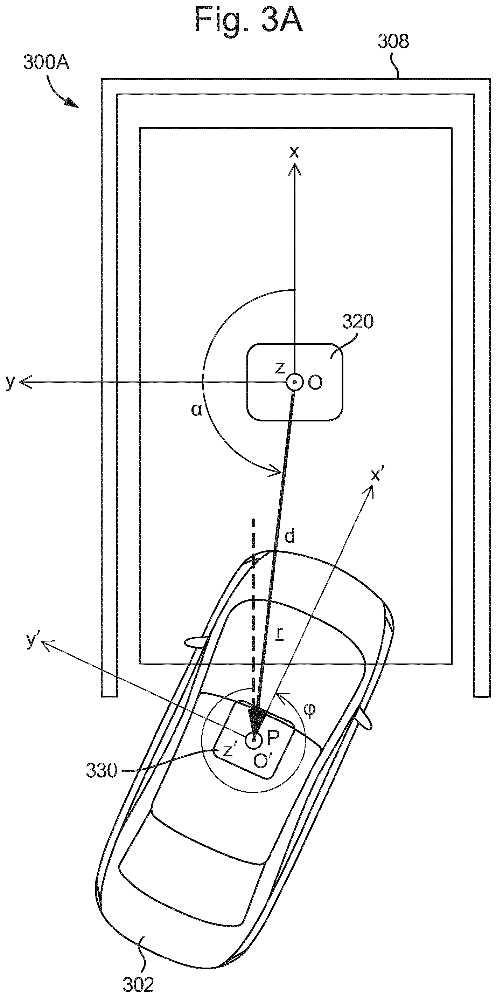

FIG. 3A shows an example parking space and a parking scenario 300A illustrating a positional relationship between a vehicle unit 330 (e.g., 106a, 106b of FIG. 1 or 230 of FIG. 2) and a ground unit 320 (e.g., 104a of FIG. 1 or 220 of FIG. 2) as it may be needed for guidance, alignment, and pairing. FIG. 3A represents the positional relationship in a ground-based coordinate system defined by perpendicular x- y-, and z-axes and having its origin O in the ground unit 320. The x- and y-axes (also referred to as the horizontal axes) span a parallel plane to a parking space defined by road markings 308. The z-axis (vertical axis) points towards the zenith assuming a right-hand oriented coordinate system. The x-axis is aligned in parallel to a longitudinal axis of the parking space pointing towards the rear of the parking space.

The vehicle unit 330 mounted on a vehicle 302 may also be associated with a vehicle-based coordinate system defined by perpendicular x'-, y'-, and z'-axes and having its origin O' in the vehicle unit. The x'- and y'-axes span a plane substantially parallel to the parking space, depending on a tilt of the vehicle-unit relative to the floor, while the z'-axis essentially points towards the zenith assuming a right-hand oriented coordinate system. The x'-axis is assumed aligned with a longitudinal axis of the vehicle pointing in driving direction.

The origins O and O' may correspond to a magnetic center point of the ground unit and the vehicle unit, respectively, which may be at the geometrical center of each. In other examples, the magnetic center may be as explained in U.S. Patent 11,394,253. In some implementations, the vertical coordinate (e.g., z or z') is omitted in a positional relationship as needed for purposes of guidance and alignment. However, it may be used in a process of determining a positional relationship e.g., if a z-height of the vehicle unit 330 matters.

In a ground-based coordinate system omitting z, the positional relationship between the vehicle unit 330 and the ground unit 320 may be defined by the position of the origin O' also denoted P and an angle of rotation ϕ measured from the dashed line parallel to the x-axis as indicated in FIG. 3A. Using Cartesian coordinates, the position P may be represented by a vector r = (xₚ, yₚ). In a polar representation, P may be defined by a distance d = square root of (xₚ² + yₚ²) and an angle α = arctan (yₚ/xₚ) measured from the x-axis. The angle ϕ is also referred herein as the vehicle rotation relative to the parking space. The position P and angle ϕ are also referred herein as the pose of the vehicle unit or simply, the pose of the vehicle.

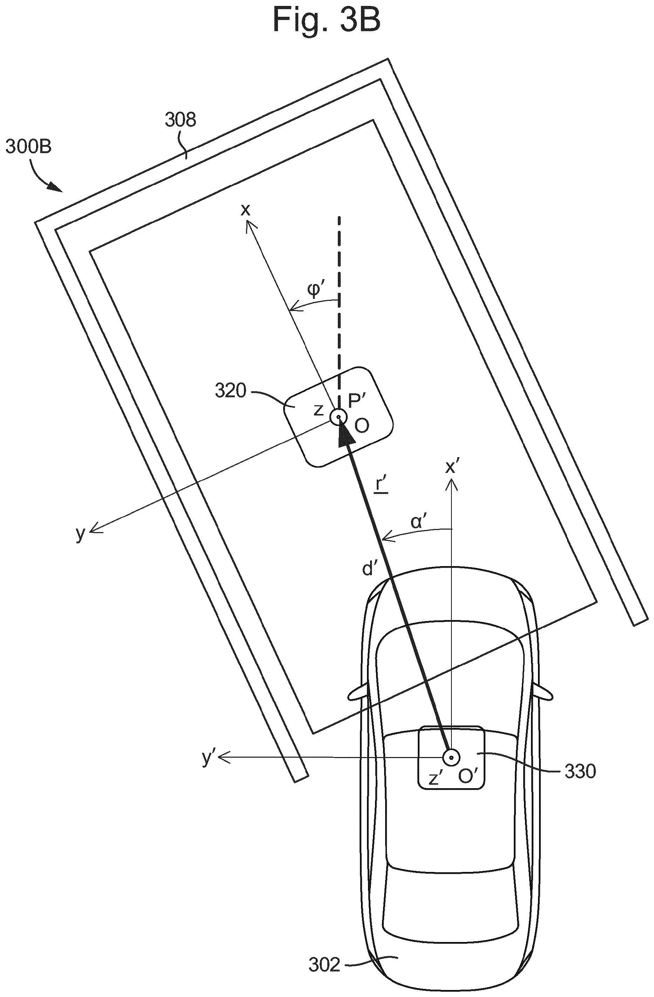

FIG. 3B shows an example parking space and a parking scenario 300B illustrating another positional relationship between a ground unit 320 (e.g., 104a of FIG. 1), and a vehicle unit 330 (e.g., 106a, 106b of FIG. 1) as it may be needed for guidance, alignment, and pairing. FIG. 3B represents this positional relationship in a vehicle-based coordinate system defined by perpendicular x'-, y'-, and z'-axes and having its origin O' as described above with reference to FIG. 3A.

The ground unit 320 is associated with the ground-based coordinate system defined by perpendicular x-, y-, and z-axes and having its origin O in the ground unit and aligned with road markings 308 as described above with reference to FIG. 3A. In the vehicle-based coordinate system omitting z', the positional relationship between the ground unit 320 and the vehicle unit 330 may be defined by the position of the origin O also denoted P' and an angle of rotation ϕ' measured from the dashed line parallel to the x'-axis as indicated in FIG. 3B. Using Cartesian coordinates, the position P' may be represented by a vector r' = (xₚ', yₚ'). In a polar representation, P' may be defined by a distance d' = square root of (xₚ'² + yₚ'²) and an angle α' = arctan (yₚ'/xₚ') measured from the x-axis. The angle ϕ' is also referred herein as the rotation of the ground unit relative to the vehicle. While the distances d' and d are identical, the angles α' and α generally differ. The position P' and angle ϕ' are also referred herein as the pose of the ground-unit or simply, the pose of the parking space.

In some implementations of a guidance and alignment system e.g., using a graphical user interface (GUI) abord the vehicle, the pose of the vehicle unit is represented in a ground-based coordinate system. In other implementations, the pose of the ground unit is displayed in a vehicle-based coordinate system. Various implementations of the vehicle onboard GUI are disclosed in U.S. Patent 9,971,353 incorporated herein as reference. In an example implementation of a guidance and alignment system, the pose of the vehicle unit 330 is determined in a ground-based coordinate system and then mathematically transformed into the pose of the ground-unit 320 as described in U.S. Patent 10,343,537 incorporated herein as reference.

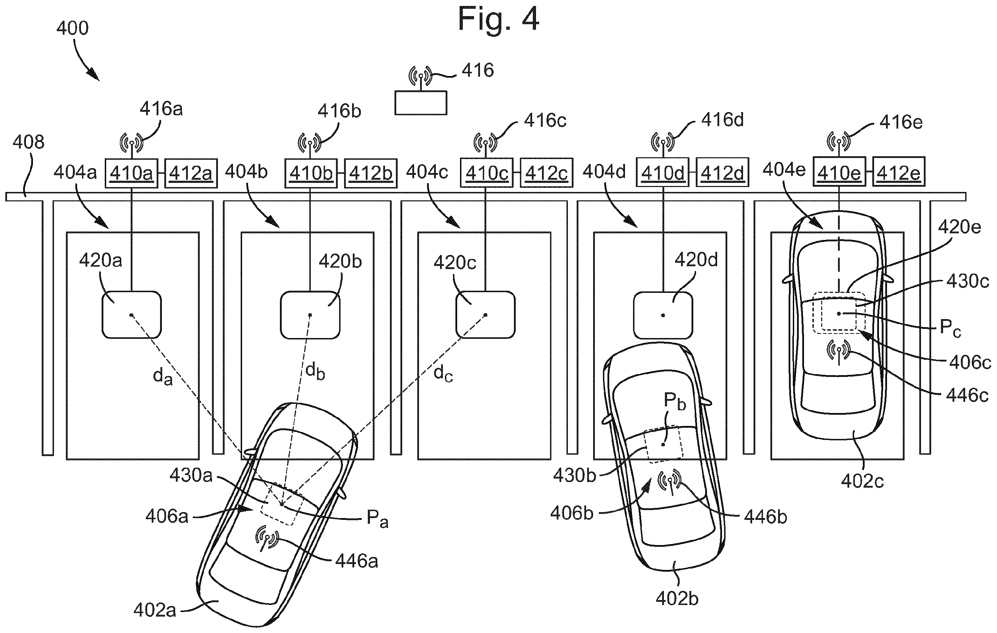

FIG. 4 shows a parking facility 400 illustrating an example multiple parking space scenario with multiple vehicles 402a, 402b, 402c. Parking spaces are outlined by road markings 408. Parking spaces are equipped with wireless charging stations (GAs) referring to GAs 404a, 404b, 404c, 404d, 404e. The plurality of GAs is sometimes also referred to as ground infrastructure. The GAs include respective WPT ground units 420a, 420b, 420c, 420d, 420e suitably positioned in the parking spaces and connected to respective GA power conversion and control units 410a, 410b, 410c, 410d, 410e implemented in some examples as "wall boxes" as described with reference to FIG. 2, and comprising corresponding energy buffers 412a, 412b, 412c, 412d, 412e (e.g., 150 of FIG. 1; 213 of FIG. 2). Further, each ground unit integrates a GA PD unit (e.g., GA PD unit 228 of FIG. 2) configured to interact with a vehicle-side reader assembly counterpart for determining a positional relationship as described herein. Moreover, the GAs provide a respective GA wireless communication unit 416a, 416b, 416c, 416d, 416e configured to communicate with vehicles (e.g., 402a, 402b, 402c). FIG. 4 also shows a central GA wireless communication unit 416 (e.g., 116 of FIG. 1) as part of the ground infrastructure connected to each of the GAs (connections not shown). In some implementations, the central communication unit is configured as a communication node of a backbone network (not shown). In other implementations, it is configured to communicate with vehicles (e.g., 402a, 402b, 402c).

Further, FIG. 4 indicates that the vehicles 402a, 402b, 402c are equipped with VAs 406a, 406b, 406c. The VAs include respective WPT vehicle units 430a, 430b, 430c suitably mounted on the vehicles and connected to respective VA power conversion and control units (e.g., 240 of FIG. 2, not shown) as described with reference to FIG. 2. Further, each vehicle unit integrates a VA PD reader assembly unit (e.g., VA PD unit 238 of FIG. 2, not shown) configured to interact with the ground-side counterpart for determining the positional relationship as described herein. Moreover, the VAs provide a respective VA wireless communication unit 446a, 446b, 446c configured to communicate with any of the GA wireless communication units (e.g., 416a, 416b, 416c, 416d, 416e).

In another aspect, FIG. 4 displays the vehicles 402a and 402b heading towards the ground unit 420b and 420d, respectively, and vehicle 402c parked over the ground unit 430c e.g., for charging. From the perspective of the vehicle 402a, the ground unit 420b is also referred herein to as the target ground unit and the GA 404b as the target GA. From the perspective of the ground unit 420b, the vehicle 402a is also referred to as the vehicle attempting to be charged. Likewise, the GA 404d and its ground unit 420d are referred to as the target GA and the target ground unit, respectively, of the vehicle 402b, which in turn may also be referred to as the vehicle attempting for being charged from GA 404d.

As mentioned with reference to FIG. 1, standard compliant WPT for electric vehicles requires wireless communications between a target GA (e.g., GA 404b) and a vehicle (e.g., 402a). In a multiple parking space multiple vehicle scenario such as illustrated in FIG. 4 by example, it is necessary to assure that the VA (e.g., 406a) is actually communicating with the target GA (e.g., 404b), and not another neighboring GA (e.g., 404d). The VA may establish wireless network communications with a GA of an adjacent parking space, falsely determining that it has established communication with its target GA. When the VA requests power and does not receive it (because it is in communication with the wrong GA), the VA may not detect the source of the problem. Likewise, the GA of the adjacent parking space may detect a fault because it is attempting to provide power and recognizing no load. This problem may be referred to as "cross-connect." In addition to the primary function of providing power to a vehicle being impossible in a cross-connect situation, additional functions such as PD for guidance and alignment, FOD, and LOD may not operate properly, if at all, when wireless communications are not established between the VA and its target GA.

As previously mentioned, guidance, alignment, and pairing in the example multiple parking space scenario illustrated in FIG. 4 requires the VA (e.g., VA 406a) to disambiguate between the target GA (e.g., GA 404b) and neighboring GAs (e.g., 404a, 404c, 404d, 404e). Pairing for wireless communications (e.g., via WiFi) additionally requires the VA to disambiguate between the GA wireless communication unit (e.g., 446b) associated to the target GA and the GA wireless communication units associated to neighboring GAs. Alternatively, it requires the GA (e.g., 104b) to disambiguate the vehicle (e.g., 402a), attempting for being charged from, from other vehicles (e.g., 402a, 402c) as well as the associated VA wireless communication unit (e.g., 446a) from the VA communication units associated to other vehicles.

Moreover, guidance and alignment may require PD to periodically determine a positional relationship between the vehicle unit (e.g., 430a) and the ground unit (e.g., 420b) in a suitable coordinate system, at a suitable update rate, and over a suitable distance range. In some implementations, the vehicle (e.g., 402a) receives 10 position updates per second for guidance beginning at a distance of 5 m and in a vehicle-based coordinate system with reference to FIG. 3B. At a distance of 1 m, the update rate is increased e.g., to 20 updates per second for alignment.

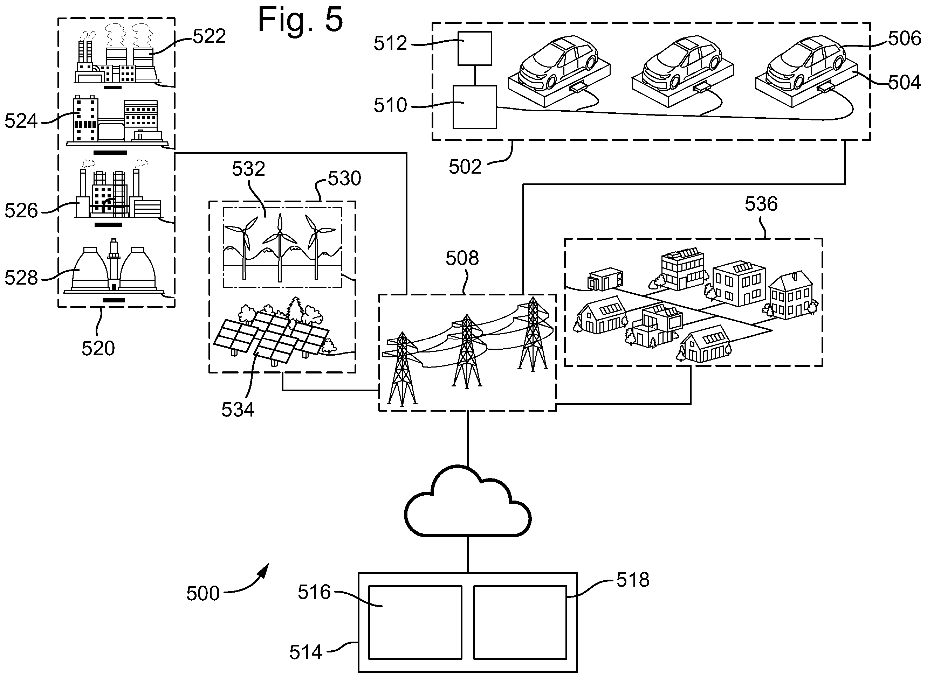

With reference to FIG. 5, an example regional power outage monitoring system 500 for monitoring power outage data associated with an electrical grid of a region is shown in accordance with the present disclosure. The system 500 comprises a ground assembly 502 comprising a plurality of ground units 504 of a wireless power transfer (WPT) system. Each ground unit 504 comprises power transfer circuitry configured to transfer power wirelessly between a vehicle battery of a corresponding electric vehicle (EV) 506 and an electrical grid 508 of the region. Each ground unit 104 in the example shown is in communication with a wall box 510 by way of which power may be accessed from the grid 508 by each ground unit 504 for the purpose of wireless power transfer. The ground assembly 502 further comprises an energy buffer 512, which may comprise a plurality of supercapacitors, configured to receive power from the electrical grid 508 for energy storage, and further configured to discharge the stored energy for use in the performance of wireless power transfer by the ground units 504. The energy buffer 512 is further configured to discharge the stored energy to the grid 508. In use, each ground unit 504 is configured to transfer power wirelessly to a corresponding electric vehicle battery of a vehicle 506 from the electrical grid 508, such as during charging the electric vehicle battery, and from the electrical vehicle battery to the electrical grid 508.

The system 500 further comprises a cloud-based computing system 514 in communication with the ground assembly 502, the cloud-based computing system 514 configured to receive power transfer data from the ground assembly 502 and further configured to receive power outage data associated with the electrical grid 508. The computing system 514 comprises a processor 516 and a memory 518, the memory 518 having stored thereon the power outage data and the power transfer data. The power transfer data is indicative of activity and usage data associated with usage of the ground assembly 502 for wireless power transfer. The power outage data is indicative of power outages of the grid, and may include for example a characterization of one or more historic power outages having occurred within the region and an indication of a frequency, duration or periodicity of the power outages within the region. In some examples, memory 518 may further comprises stored thereon a machine learning model trained on the power outage data and/or the usage data for the purpose of determining an energy storage threshold of the energy buffer 512 of the ground assembly 502. The power outage data may be modelled across time for the region and the power outage data of the memory 518 may be updated based on each subsequent power outage. Some examples will be appreciated wherein the model may be used to predict an upcoming power outage.

In the example 500 shown, the electrical grid 508 of the region is configured to receive generated power from power plants 520 of the region, such as nuclear 522, hydroelectric 524, geothermal 526 and biomass 528 power plants, and further from renewable energy sources 530, such as wind 532 and solar 534 energy sources. The electrical grid 508 is configured to provide the generated power to power consumers 536 such as residential, commercial and industrial power consumers within the region. In the example 500 shown, the system 500 further comprises a sensor system having a plurality of sensors (not shown) in communication with the cloud-based computing system 514 and configured to detect a power state of the grid 508, for example to detect or predict a grid power outage in the region.

In use, the processor 516 of the system 514 may use sensor data obtained from the sensor system, indicative of a power state of the electrical grid 508, to determine instances of a grid power outage for the region. The processor 516 may use the sensor data to determine a recovery period for each detected power outage, the recovery period characterizing a duration from a time instance of a power outage to a time instance of a recovery from the power outage. The time instance of the power outage may be any suitable time instance associated with the onset of the power outage, and may in some examples be a time instance at which a period of grid instability is detected, such as time instance at which a grid power undersupply is detected when compared with a grid demand. The time instance of the recovery may be any suitable time instance associated with a return to grid stability, and may for example be time instance at which grid power supply is detected to match or exceed grid demand. In some examples, the time instance of recovery may be determined based on a threshold elapsed time during which grid power is detected to match or exceed grid demand.

The processor 516 may receive the power transfer data from the ground assembly 502, and may use the power transfer data to determine a power transfer performance loss parameter of the ground assembly 502 associated with an amount power transfer performance lost during a power outage, for example associated with a cumulative amount of wireless power transfer demand from the ground assembly 502 during the detected power outage, and in particular during the recovery time.

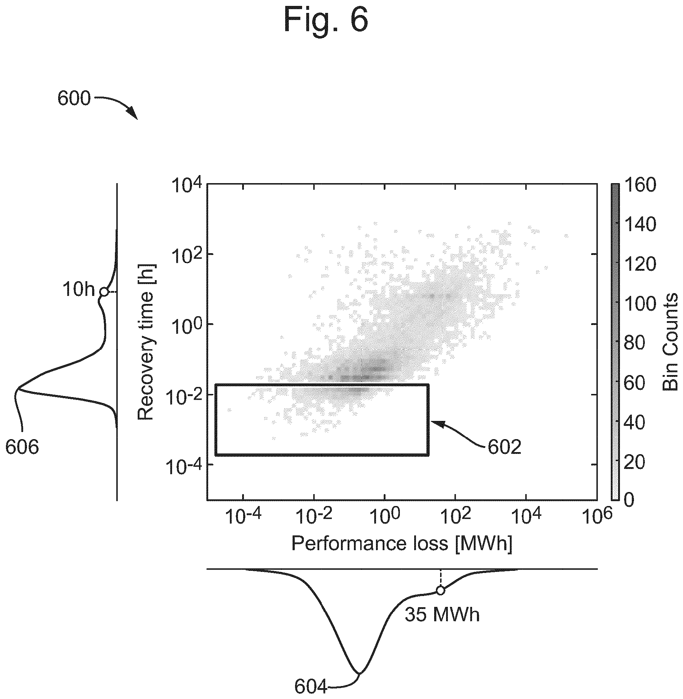

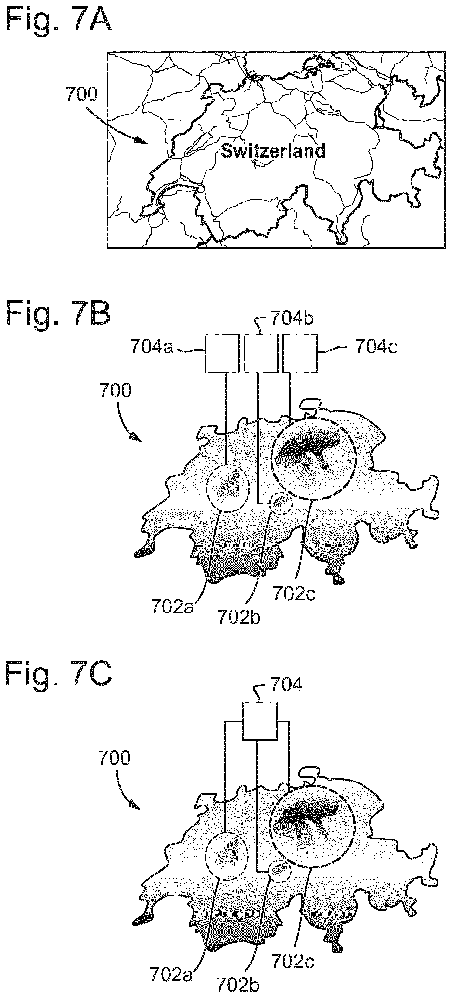

The power transfer performance loss parameter and the recovery time may in some examples be used by the processor 516 to determine an optimum energy storage suitable for mitigating the effects of a power outage in the region. FIG. 6 shows an example plot 600 depicting data points which may be obtained from power transfer data and power outage data over a period for a particular region, which in the example shown is Switzerland (see. FIG. 7A). Each point of the plot 600 indicates a performance loss parameter of a ground assembly and the corresponding recovery time of the power outage, with the increased shading intensity indicating a higher frequency of data points recorded for a particular value. As can be seen from FIG. 6, peak performance loss 604 and peak recovery time 606 converged for the corresponding region at around 10⁻² hours (around 36 seconds). Together, performance loss data and recovery time data such as that shown in FIG. 6 may be used to determine a region-specific power transfer threshold window 602 for use in determining a power transfer threshold for a region. The power transfer threshold window may be determined in a dynamic fashion, making use of updated or recent performance loss data and recovery time data for the region over time such that the amount of energy buffer for ground assemblies in the region is optimized to reduce unnecessary energy storage and/or to reduce unnecessary power transfer performance loss. The power transfer circuitry in each ground unit 504 of the ground assembly 502 is configured to deliver around 10 kW over the peak recovery period of 36 seconds, which amounts to around 0.1 kWh of energy (360 kJ) demand which is required to be met during the peak power outage period of around 36 seconds. As such, the processor 516 of the system 500 may communicate an energy storage threshold of 0.1 kWh (360 kJ) to the ground assembly 502.

In order to ensure continued wireless power transfer during the recovery time of most power outages in the region, and thereby reduce periods of lost performance and the effects of transient events on power transfer circuitry, the ground assembly 502 may be configured to initiate a power transfer to the energy buffer 512 based on the received energy storage threshold for the region. In the example shown, the ground assembly 502 comprises a single energy buffer 512 for all of the ground units 504 of the ground assembly 502. Examples will be appreciated wherein each ground unit 504 may comprise one or more energy storage units 512 incorporated therewithin. A processor of the ground assembly 502 may detect the presence of vehicle 506 engaged at a ground unit 504 and ready to engage in wireless power transfer by way of the power transfer circuitry thereof as described herein. On detection of the vehicle 506, the processor may initiate the transfer of power from the electrical grid 508 to the energy buffer 512 based on the received energy storage threshold for the region. In the example shown, the processor is configured to detect when power transfer to energy buffer meets or exceeds the energy storage threshold for the region, and based on the detection, is configured to initiate wireless power transfer from the grid 508 to a vehicle 506 located at a corresponding ground unit 502.

In the example shown, the processor is configured to detect when the battery of the vehicle 506 is fully charged, and in response to the detection, cease the wireless power transfer to the vehicle 506. Following the cessation of wireless power transfer to the vehicle 506, the processor is configured to initiate discharge of the stored energy at the energy buffer 512 to the grid 508. Therefore, in the example shown, the ground assembly 502 is configured to control an amount of energy stored at the energy buffer 512 based on a determined energy storage threshold of the region, and in response to a demand for wireless power transfer at the ground units 504. In some examples, the processor may be configured to detect a threshold amount of charge at a vehicle 506 and may initiate the discharge of the corresponding stored energy in response to the detection, prior to a vehicle reaching a full charge. In some examples, the processor may be configured to initiate storage of an amount of energy meeting or exceeding the energy storage threshold for each ground unit 504 at the ground assembly 502, such that each engaged ground unit 504 may be supplied with an energy buffer against a grid power outage in the region.

As such, the example system of FIG. 5 demonstrates the ability of systems and methods of the present disclosure to mitigate the effects of power outages in a region on wireless power transfer systems. It will be appreciated that in place of, or in addition to, the described power transfer data and power outage data, any suitable data may be used to inform the storage of energy at an energy buffer of a ground assembly.

FIG. 7A shows the region represented in the illustrative example 500 of FIG. 5, and FIG. 6. FIG. 7B shows an example such system in line with that described for FIG. 5 wherein the region 700 represented is split into a plurality of subregions 702a-c, each subregion 702a-c comprising a separate corresponding system 704a-c as described in relation to FIG. 5. In the example of FIG. 7B, each of the systems 704a-c is configured to determine the energy storage threshold based on power outage data obtained from the corresponding region 702a-c. As such, each system 704a-c may be configured to provide a more focused energy storage threshold based on local grid data. By contrast, the example shown in FIG. 7C depicts a single system 704 as described in relation to FIG. 5, which may determine a broader energy storage threshold for the collection of the subregions 702a-c, or for the wider region 700 as a whole. Examples will be appreciated wherein a region-specific energy storage threshold may be determined based on a region or subregion of any suitable size, and examples will be appreciated wherein a corresponding energy storage threshold may be determined for each individual ground assembly, or each individual ground unit.

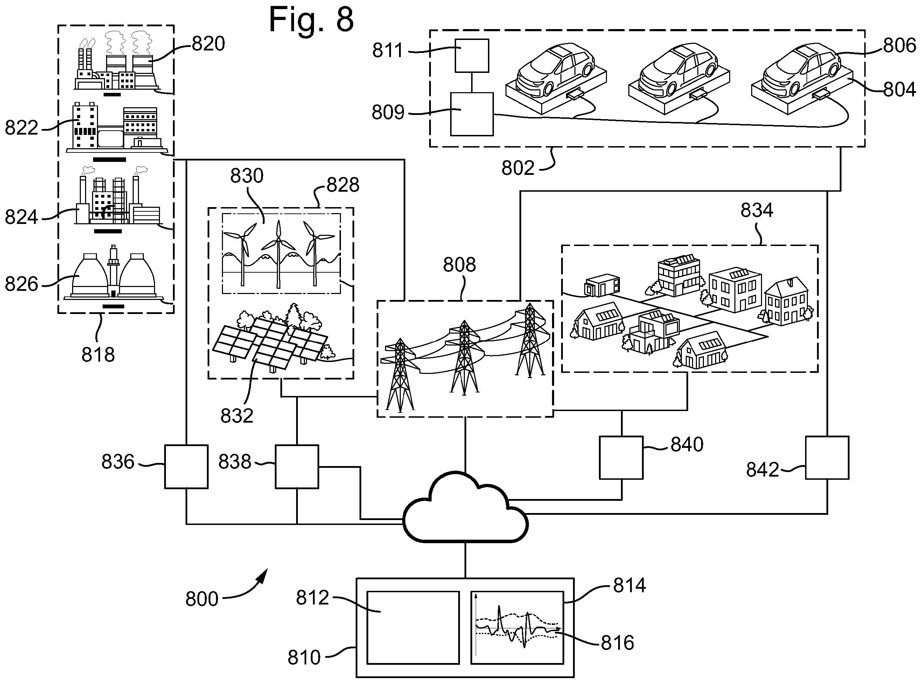

Referring to FIG. 8, an example electrical grid monitoring system 800 for balancing power transfer between energy buffers and an electrical grid of a region is shown in accordance with the present disclosure. The system 800 comprises a ground assembly 802 comprising a plurality of ground units 804 of a power transfer system, which in the particular example shown are wireless power transfer (WPT) systems. Each ground unit 804 comprises power transfer circuitry configured to transfer power wirelessly between a vehicle battery of a corresponding electric vehicle (EV) 806 and an electrical grid 808 of the region. Each ground unit 804 in the example shown is in communication with a wall box 809 by way of which power may be accessed from the grid 808 by each ground unit 804 for the purpose of wireless power transfer. The ground assembly 802 further comprises an energy buffer 811, which may comprise a plurality of supercapacitors, configured to receive power from the electrical grid 808 for energy storage, and further configured to discharge the stored energy for use in the performance of wireless power transfer by the ground units 804. The energy buffer 811 is further configured to discharge the stored energy to the grid 808. In use, each ground unit 804 is configured to transfer power wirelessly to a corresponding electric vehicle battery of a vehicle 806 from the electrical grid 808, such as during charging the electric vehicle battery, and from the electrical vehicle battery to the electrical grid 808.

The system 800 further comprises a cloud-based computing system 810 in communication with the ground assembly 802, the cloud-based computing system 810 configured to receive power transfer data from the ground assembly 802 and further configured to control a direction of power transfer of the ground assembly 802, including a direction of power transfer to and from the energy buffer 811. The computing system 810 comprises a processor 812 and a memory 814, the memory 814 having stored thereon a probabilistic machine learning model 816 trained on the power transfer data obtained from the ground assembly 802. The power transfer data used to train the probabilistic machine learning model 816 is indicative of an amount of power available for use from the energy buffer 811 and is additionally indicative of power storage available from the energy buffer 811, from each ground assembly 802 in the region. The power available for use, and the available energy storage, are together indicative of a power surface density and an energy surface density of the system within the region, and when modelled across time by way of the power transfer data, can be used to predict, using the model 816, a power status of the region at a particular time instance.

In the particular example 800 shown, the electrical grid 808 of the region is configured to receive generated power from power plants 818 of the region, such as nuclear 820, hydroelectric 822, geothermal 824 and biomass 826 power plants, and further from renewable energy sources 828, such as wind 830 and solar 832 energy sources. The electrical grid 808 is configured to provide the generated power to power consumers 834 such as residential, commercial and industrial power consumers within the region. In the example 800 shown, the system 800 further comprises a sensor system having a first sensor 836 in communication with the cloud based computing system 810 and configured to detect an amount of power generated by the power plants 818 of the region and provided to the electrical grid 808, a second sensor 838 configured to detect an amount of power generated by the renewable energy sources 828 of the region and provided to the electrical grid 808, and a third sensor 840 configured to detect an amount of power consumed from the electrical grid by the power consumers 834 of the region. The sensor system further comprises a fourth sensor 842 configured to detect an amount of power generated and provided to the electrical grid 808 and consumed from the electrical grid 808 by the ground assembly 802.

In use, the processor 812 of the system 800 may use sensor data obtained from the first 836, second 838, third 840 and fourth sensors 842, indicative of power supply and power consumption from the electrical grid 808, to determine instances in time of undersupply or oversupply of power to the electrical grid 808. In order to overcome the power deficit and power surplus during the periods, it may be necessary to consider the availability of power and power storage from energy buffers 811 accessible by way of the ground assemblies 802 of the region. Such power availability and power storage may act to balance the electrical grid 808 during the periods by contributing power to overcome a power deficit, or storing power to overcome a power surplus. In order to determine the power availability and power storage, numerous considerations are required such as those discussed herein, including the availability of energy buffer connectivity to the grid, together with numerous individual energy buffer characteristics of the energy buffers 811, of which there may be millions. Such an amount of parameters for consideration in calculation of the power availability and power storage capacity of such energy buffers 811 may make real-time computation thereof time and energy intensive, and may in some cases not meet the minute- or sub-minute response periods required for effectively balancing the electrical grid 808.

Using the system as described in FIG. 8, however, during time instances of determined undersupply or oversupply of power to the grid 808, the processor 812 is configured to use the probabilistic machine learning model 816 to predict a power surface density of the region at the time instances to establish the power supply and power storage capability of the energy buffers 811 of the ground assemblies 802 at the time instances. Such a prediction is based on learned trends in power transfer data obtained from each ground assembly 802, regarding availability of the corresponding energy buffer 811, along with the associated electric vehicles and batteries historically connected thereto. Since patterns can be obtained from the power transfer data to determine particular regularities in behavior in relation to usage of each ground unit 804 and ground assembly 802, the prediction of the power surface density of the region can be afforded a level of confidence associated with the regularities. When operating within an established level of confidence, the predicted power surface density can offer a much more time and resource efficient mode of determining power requirements for balancing the electrical grid 808 than a continuous real-time determination of power surface density.

Based on the predicted power surface density, the processor 812 is then further configured to set a direction of net power transfer of the ground assembly 802, including a direction of net power transfer between the corresponding energy buffer 811 (which may in some examples be a plurality of energy buffers, or a plurality of energy buffer components as described herein) and one or more of: i. the electrical grid 808; and ii. the electric vehicles 806. During times of undersupply of power to the electrical grid 808, wherein the available power generation by the power plants 820 and the renewable energy sources 828 is not sufficient to meet the power demand of the power consumers 834, the processor 812 may predict based on the power surface density that the energy buffers 811 comprise stored power capable of meeting the power deficit. In response to the prediction, the processor 812 may then set a direction of net power transfer of each ground assembly 802 (or corresponding energy buffer, or energy buffer component thereof) to a net positive output of power to the electrical grid 808 (for example by way of discharge of the energy buffer as described herein), the provision of power substantially equal to the power deficit calculated by the processor 812 using the sensor data from the first 836, second 838, third 840 and fourth 842 sensors.

Similarly, during times of oversupply of power to the electrical grid 808, wherein the available power generation by the power plants 820 and the renewable energy sources 828 exceeds the power demand of the power consumers 834, the processor 812 may predict based on the power surface density that the energy buffer 811 of the ground assemblies 802 comprise power storage capacity capable of storing the power surplus. In some solutions, power generators such as specific power plants 820 or specific renewable energy sources 828 may be deactivated or disconnected from the electrical grid 808 such that the power generation is reduced so as not to exceed the power demand. This could however result in wasted energy, particularly in the form of renewable energy which may itself be intermittently available and therefore not guaranteed to be available for a particular time period when needed. Using the system 800 of FIG. 8, however, in response to the prediction of the power surface density of the region, the processor 812 may then set a direction of net power transfer of each ground assembly 802 to a net storage of power within respective energy buffer 811, from the electrical grid 808, the power storage substantially equal to the power surplus calculated by the processor 812 using the sensor data from the first 836, second 838, third 840 and fourth 842 sensors.

As such, the example system of FIG. 8 demonstrates the ability of systems and methods of the present disclosure to balance the electrical grid during periods of power undersupply or oversupply within a region. It will be appreciated that in place of, or in addition to, the power surface density, an energy surface density of the region may in some examples be predicted as part of the predicted power status of the region at the time instance. It will be appreciated that, as described herein, the energy buffers may comprise any suitable combination of energy storage components, for example supercapacitors and/or batteries. The control of the net direction of power transfer by the processor may in some such embodiments comprise an initial control of such components having a faster reaction time, such as supercapacitors configured for immediate discharge or storage, followed by a subsequent control of such components having a slower, more sustained reaction, such as batteries configured for slower, longer term discharge or storage.

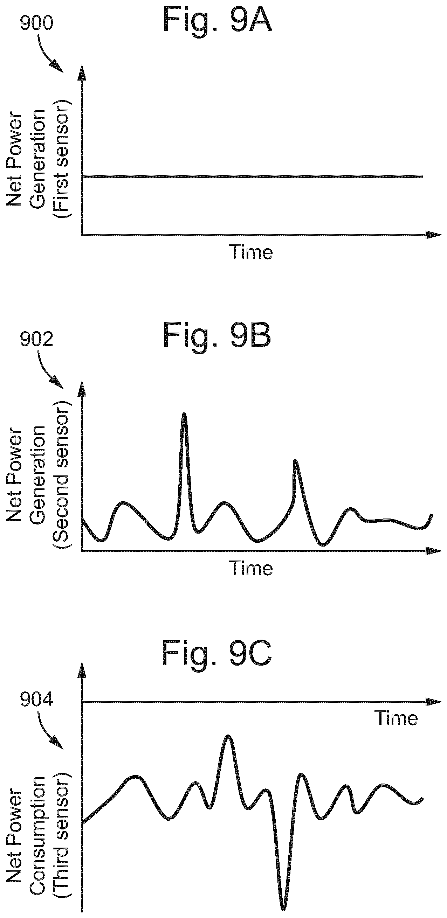

Referring to FIG. 9A to FIG. 9C, charts depicting example sensor data are shown, the sensor data obtained from the sensor system of FIG. 8. In particular, FIG. 9A depicts sensor data 900 obtained from the first sensor 836 indicting power output to the electrical grid 808 from power plants 820. As can be seen from the sensor data 900 of FIG. 9A, the output of power to the grid from power plants 820 remains stable over time. FIG. 9B depicts sensor data 902 obtained from the second sensor 838 indicating power output to the electrical grid 808 by renewable energy sources 828. As can be seen from the sensor data 902, power output from renewable energy sources can in some cases fluctuate over time, typically as a result of weather changes or time of day changes in the cases of wind and solar energy. FIG. 9C shows sensor data 904 obtained from the third sensor 840 indicating power consumption from the grid by a variety of power consumers 834 such as residential, commercial and industrial power consumers. As can be seen from FIG. 9C, power consumption from the electrical grid 808 can fluctuate over time in accordance with consumer behavior.

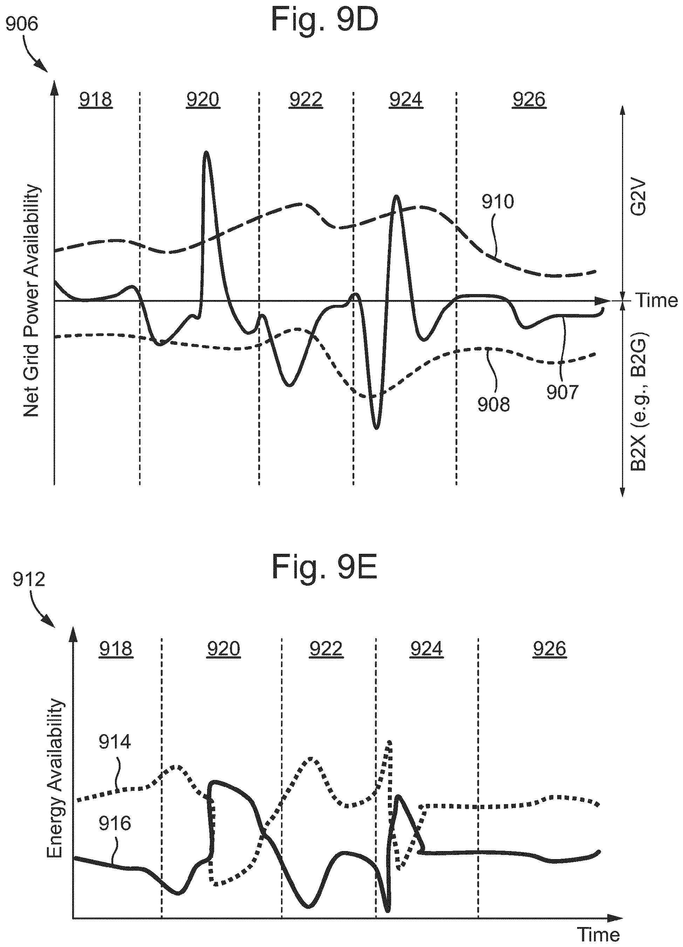

As described in relation to FIG. 8, in use the processor 812 may process the sensor data 900, 902, 904 to determine a net power availability of the electrical grid 808 by comparing the power generation data 900, 902 with the power consumption data 904. Example net power availability 907 of the electrical grid 808 over time is shown depicted in the chart 906 of FIG. 9D. Periods wherein the net power availability 907 is positive indicate a greater supply of power to the electrical grid 808 by power generators 820, 828 than that consumed by power consumers 834. Periods wherein the net power availability 907 is negative indicate a lower supply of power to the electrical grid 808 by power generators 820, 828 than that consumed by power consumers 834. The resulting power oversupply or undersupply could potentially risk grid imbalance.

The processor 812 of the system 800 of FIG. 8 is configured to predict a power status of the region representing power availability (power surface density) or power storage availability (energy surface density) of the energy buffers 811 of ground assemblies 802 within the region. An ability of the system 800 to deal with oversupply and undersupply fluctuations as shown by the net power availability data 906 of FIG. 9D may depend on the extent of the fluctuations and the overall power availability and power storage capacity as represented by the predicted power status of the region. In the particular example 800 shown, predicting the power status by the processor 812 using the probabilistic machine learning model 816 comprises predicting an undersupply threshold 908 or an oversupply threshold 910 shown represented on the chart 906 of FIG. 9D. The undersupply threshold 908 and the oversupply threshold 910 each represent a maximum capability of the energy buffers 811 to provide power or store energy to counteract a corresponding undersupply of power or an oversupply of power respectively. The undersupply threshold 908 and the oversupply threshold 910 are shown depicted together on the chart 906 of FIG. 9D, and may be predicted simultaneously or may be predicted individually, for example based on a corresponding detection of either a power undersupply or a power oversupply respectively. It will be appreciated that, as a result of the statistical nature of the probabilistic machine learning model 816, the undersupply threshold 908 and the oversupply threshold 910 comprise a confidence interval setting, for example, a percentage confidence of the predicted thresholds. The confidence interval may be the same for each of the thresholds or may in some cases be different. It may be the case that, when the net power availability 906 approaches one of the predicted thresholds, for example approaching or exceeding the corresponding confidence interval of the respective threshold 908, 910, the processor may perform a real-time calculation of the power surface density of the region. Such a real-time computation may require a greater amount of time and resources than the predicted power surface density, but may provide an accurate evaluation of the power surface density of the region at the time instance such that appropriate grid balancing action may be taken.

A chart 912 of example predicted energy availability of energy buffers within the region is provided in FIG. 9E, which shows the energy storage availability 914 (for receiving surplus energy from the grid) and the stored energy availability 916 (for contributing energy to energy receivers such as the grid) predicted to be available from energy buffers in the region by way of the ground assemblies. The predicted energy availabilities 914, 916 may be used by the processor in determining the undersupply threshold 908 and the oversupply threshold 910.

As can be seen in the chart 906 of FIG. 9D, the net power availability 907 in a region fluctuates over time, and the associated predicted undersupply threshold 908 and oversupply threshold 910 also fluctuate in accordance with the patterns in power transfer data learned from the ground assemblies 802, representing the associated behavior of the ground units over time. The temporal fluctuations in the predicted undersupply threshold 908 and oversupply threshold 910, which can represent the predicted power surface density and energy surface density of the ground assemblies in a region, can be seen further represented in FIG. 9E, which shows a chart 912 of example predicted energy availability of energy buffers within the region. In particular, the energy storage availability 914 (for receiving surplus energy from the grid) and the stored energy availability 916 (for contributing energy to energy receivers such as the grid) predicted to be available from energy buffers in the region by way of the ground assemblies are shown over the same time period as that depicted in FIG. 9D. The predicted energy availabilities 914, 916 may be used by the processor in determining the undersupply threshold 908 and the oversupply threshold 910 shown in FIG. 9D.

The time period represented by the net power availability chart 906 of FIG. 9D and the energy availability chart 912 of FIG. 9E is shown segmented into five sections 918, 920, 922, 924, 926 which will now be discussed in-turn. During the first section 918, as can be seen from the net power availability 907 in FIG. 9D, power consumption from the electrical grid is approximately equal to power generation, such that the net power availability 907 of the electrical grid is approximately zero. During the first section 918 therefore, the electrical grid may be considered to be balanced. As can be seen in the energy availability chart 912 of FIG. 9E, there is predicted to be approximately double the energy storage availability 914 when compared with the stored energy availability 916 present within energy buffers of the region during the first section 918. The predicted undersupply and oversupply thresholds 908, 910 shown in FIG. 9D indicate a relatively narrow predicted window of energy availability during the first section 918.

Referring to the second section 920, it can be observed that for a short period there is a small undersupply of power to the electrical grid when compared with electrical power consumption, resulting in the net grid power availability 907 dropping below zero. As a result, the processor sets a direction of net power transfer of ground assemblies within the region to B2G, such that stored energy within energy buffers is transferred to the electrical grid to meet the deficit. As a result of the change in direction of net power transfer, the predicted amount of stored energy 916 within the energy buffers can be observed to drop, and the amount of predicted energy storage availability 914 can be observed to increase accordingly. At the local minimum of the momentary trough in net grid power availability 907, the measured net grid power availability 907 approaches the predicted undersupply threshold 908, thereby indicating that, in accordance with the power transfer data on which the model was trained, the stored energy availability 916 within the energy buffers is predicted to be insufficient to meet the deficit in grid power availability 907. In some examples, the processor therefore performs a real-time determination of a power status of the region, including a real-time determination of a power surface density and an energy surface density of the region, in order to control the distribution of power and optionally source power from external sources where needed. Following the local minima of the third section 922, the net grid power 907 experiences a peak in availability, in which the net grid availability 907 greatly exceeds zero. As such, and on detection thereof, the processor sets the direction of net power transfer to G2B within the region, such that surplus grid energy is transferred by way of the plurality of power transfer systems to be stored in energy buffers within the region. The energy storage can be observed to result in a reduction in predicted energy storage availability 914, and a corresponding increase in predicted stored energy availability 916. The local maximum of the peak in net grid power availability 907 exceeds the predicted oversupply threshold 910 such that a real-time determination of the power status of the region is performed for allocation and sourcing of grid power receivers and energy storage, which may include grid power receivers and energy storage external to the region.

Referring to the third section 922, and similarly to the second section 920, it can be observed that for a short initial period there is an undersupply of power to the electrical grid when compared with electrical power consumption, resulting in the net grid power availability 907 dropping below zero. As a result, the processor again sets the direction of net power transfer of the ground assemblies within the region to B2G, such that stored energy within energy buffers is transferred to the electrical grid to meet the deficit. As a result of the change in direction of net power transfer, the predicted amount of stored energy 916 within the energy buffers can be observed to drop, and the amount of predicted energy storage availability 914 can be observed to increase accordingly. At the local minimum of the more pronounced trough in net grid power availability 907, the measured net grid power availability 907 greatly exceeds the predicted undersupply threshold 908, thereby indicating that, in accordance with the power transfer data on which the model was trained, the stored energy availability 916 within the energy buffers is predicted to be insufficient to meet the deficit in grid power availability 907. As with section 920, in some examples the processor therefore performs a real-time determination of a power status of the region, including a real-time determination of a power surface density and an energy surface density of the region, in order to control the distribution of power and optionally source power from external sources where needed. Following the local minima of the second section 920, the net grid power 907 reaches approximately zero such that the amount of power contribution to the grid is approximately equal to the power consumption from the grid, and the grid is balanced near the end of the third section 922.

Referring to the fourth section 924, the distribution of the measured net grid power availability follows similarly to the second section 920. In particular, it can be observed that for an initial period there is a significant undersupply of power to the electrical grid when compared with electrical power consumption, resulting in the net grid power availability 907 dropping below zero. As a result, the processor sets a direction of net power transfer of the ground assemblies within the region to B2G, such that stored energy within energy buffers is transferred to the electrical grid to meet the deficit. As a result of the change in direction of net power transfer, the predicted amount of stored energy 916 within the energy buffers can be observed to drop, and the amount of predicted energy storage availability 914 can be observed to increase accordingly. As with the third section 922, at the local minimum of the initial trough in net grid power availability 907, the measured net grid power availability 907 can be observed to drop below the predicted undersupply threshold 908, thereby indicating that, in accordance with the power transfer data on which the model was trained, the stored energy availability 916 within the energy buffers is predicted to be insufficient to meet the deficit in grid power availability 907. As with the second section 920 and the third section 922, in some examples, the processor therefore performs a real-time determination of a power status of the region, including a real-time determination of a power surface density and an energy surface density of the region, in order to control the distribution of power and optionally source power from external sources where needed. Following the local minima of the fourth section 924, the net grid power 907 experiences a strong peak in availability, in which the net grid availability 907 exceeds zero. As such, and on detection thereof, the processor sets the direction of net power transfer to G2B within the region, such that surplus grid energy is transferred by way of the ground assemblies to be stored in energy buffers within the region. The energy storage can be observed to result in a reduction in predicted energy storage availability 914, and a corresponding increase in predicted stored energy availability 916. The local maximum of the peak in net grid power availability 907 exceeds the predicted oversupply threshold 910 such that a real-time determination of the power status of the region is performed for allocation and sourcing of grid power receivers and energy storage, which may include grid power receivers and energy storage external to the region. Following this peak in the net grid power availability 907 in the fourth section 924, there is a momentary drop below zero before a recovery to approximately zero at the end of the fourth section 924.

Referring to the fifth section 926, similarly to the first section 918, while there is some small drop in net grid power availability 907 toward the end of the fifth section 926 the net grid power availability 907 remains approximately zero during this section 926 such that the grid is largely balanced.

It will be appreciated that the setting of the direction of net power transfer by the processor may be for some or all of the ground assemblies within the region, and that such control of the ground assemblies may be distributed dynamically over time within the region to avoid excessive control of any one such ground assembly or ground unit thereof. Such dynamic control may in some cases maximize periods of energy buffer charging within the region. It will further be appreciated that such control may additionally be spatially distributed within the region based on local fluctuations in power supply and demand within the region. As such, in some examples the control of the ground assemblies may be determined based on a location of the ground assemblies within the region, and may be further based on a local power status determined by the processor, the local power status determined for a subregion within the region, the subregion comprising, or within a threshold proximity of, said location of the ground assembly. It will be appreciated that the subregion is smaller than the region but is wholly contained within the region.

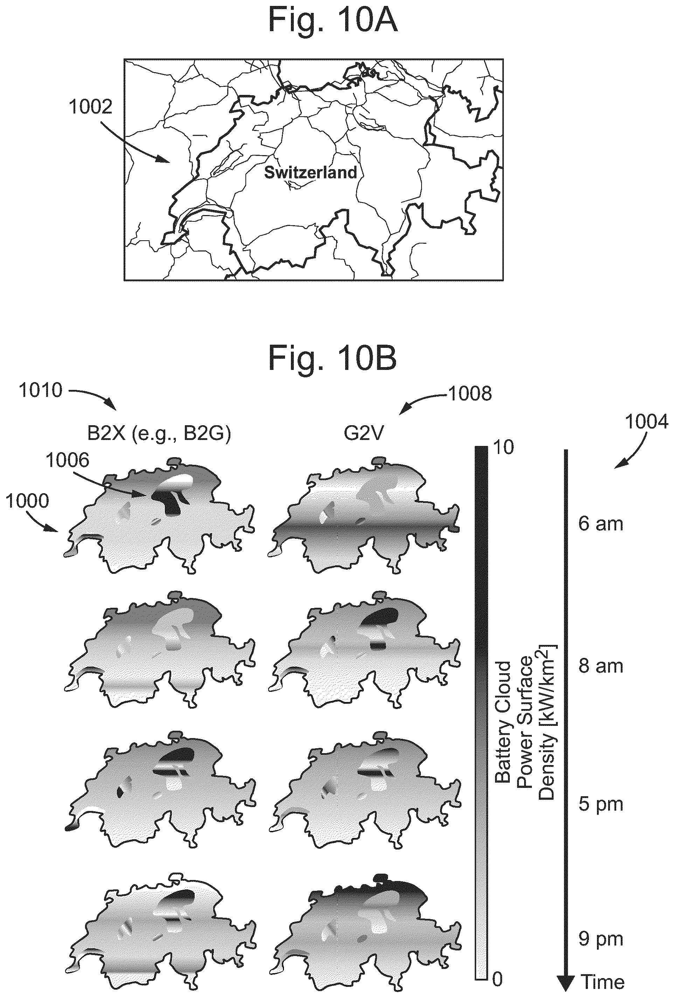

FIG. 10B depicts a sequence of example predicted power surface densities 1000 of a plurality of ground assemblies, and associated energy buffers, distributed within the region of Switzerland 1002 as seen in the map view of FIG. 10A, the power surface densities integrated across the region 1002 at different times 1004 throughout a working day, from 6 am to 9 pm. The power surface densities 1000 are predicted based on historic power transfer data obtained from the ground assemblies, the power transfer data used to train a machine learning model in predicting the power surface densities at a particular time instance 1004. It will be appreciated that the power transfer data may be any suitable data as described herein, and may be obtained by the ground assemblies, for example from an energy buffer, a ground unit or a vehicle, and communicated to a processor for use in training the model. As can be seen from FIG. 10B, the power surface density 1000 in some examples may be measured in kW/km² as depicted, and in such examples may range from approximately 0 kW/km² to approximately 10 kW/km² or more (for example ranging in the order of MW/km², GW/km² or any suitable order of magnitude depending on the application), wherein in FIG. 10B the value of the predicted power surface density 1000 is represented by shading, lighter shades indicating a lower power surface density. As can be seen in FIG. 10B, the power surface densities may be integrated across a region as a whole, or may include specific predicted power surface densities integrated across an area or sub-region of interest 1006. In some examples, such as that depicted, the power surface densities 1000 may be predicted depending on a direction of net power transfer of the plurality of ground assemblies, whether from grid to energy buffer (G2B, e.g., when the energy buffer is being charged) or from energy buffer to power receiver (B2X, e.g., when the energy buffer is being discharged), such as energy buffer to grid (B2G) or energy buffer to home (B2H). In the case of G2B, the power surface density 1000 represents the power availability within the electrical grid suitable for transfer to energy buffers by way of the ground assemblies. In the case of B2X, the power surface density 1000 represents the power available to be used from stored energy within the energy buffers, suitable for transfer to a power receiver such as the electrical grid, by way of the ground assemblies. The power for a specific region of interest 1006 in each case (G2B 1008, B2X 1010) may be determined from the power surface density 1000, for example, by way of the following::${P}_{B 2 X} \left(t\right) = \int {P}_{Surface , B 2 X} \left(t\right) {dA}_{B 2 X} ; {P}_{B 2 G} \left(t\right) = \int {P}_{surface , G 2 B} \left(t\right) {dA}_{G 2 B}$
*P*_{*B*2*X*}(*t*) *=* ∫ *P*_{*surface,B*2*X*}(*t*) *dA*_{*B*2*X*} ; *P*_{*G*2*B*}(*t*) *=* ∫ *P*_{*surface,G*2*B*}(*t*) *dA*_{*G*2*B*}
in which, P_{surface,B2X}(t) represents the power surface density 1000 of the entire region 1002 and P_{B2X}(t) represents the power 1010 of the sub-region of interest 1006 (A_{B2X}) at the time instance 1004, t, when the direction of power transfer is B2X 1010; P_{surface,G2B}(t) represents the power surface density 1000 of the entire region 1002 and the P_{G2B}(t) represents the power 1008 of the sub-region of interest 1006 (A_{G2B}) at the time instance 1004, t, when the direction of net power transfer is G2B 1008. At the area of interest 1006 within the region 1002 in the example shown, there is a high number of residences, but workers commute from the area 1006 to other areas within the regions for work. As such, and as can be seen in FIG. 10B, the predicted power surface density 1000 for B2X is lower during working times (between 8 am and 5 pm), when EVs are more likely to be in use and away from their respective ground unit or ground assembly. Therefore, the available stored energy and energy storage of energy buffers may be reduced in the area during working times. It will be appreciated that in some examples, the energy buffers may remain charged during such periods. The power surface density 1000 for B2X of the area 1006 can be observed to be higher in the area during the early morning (6 am) and in the evening (5 pm and 9 pm) when EVs are more likely to be engaged with the respective ground units or ground assemblies, for example while charging the EV battery. Such periods may require initial or simultaneous charging of energy buffers as described herein. Contrastingly, the power surface density 1000 for G2B may be reduced during the early morning and evening (6 am and 9 pm) when power producers are likely to be in less demand and renewable power production sources such as solar plants experience reduced operation, while being higher during the working day (8 am and 5 pm).

In some examples, wireless power transfer systems may be engaged during specific time periods, such as overnight, for vehicle charging. For example, a large number of wireless power transfer systems of ground assemblies may be occupied in a specific area for fleet vehicle charging, such as in a fleet vehicle charging depot. The corresponding energy buffers of the engaged wireless power transfer systems may therefore be fully charged in regions, or sub-regions, corresponding to the location of the engaged wireless power transfer systems during this period, providing a high power surface density for the corresponding region or subregion. At other times, such as during the working day, the charged vehicles may be disengaged from the wireless power transfer systems. In such systems, the energy buffers may be caused to retain the stored energy thereof for use in grid balancing. At the same time in other regions or sub-regions, such as regions or subregions more highly populated with workplaces or office buildings, wireless power transfer systems may be engaged by vehicles of workers for charging, and may therefore create a demand for grid energy diversion to the corresponding region or subregion. In some such examples, such as in response to a detected or predicted grid power undersupply in the regions or subregions, the stored energy of the energy buffers located in the overnight charging regions may be caused to be discharged to the grid for redirecting of power to the regions or subregions more highly populated with workplaces or office buildings during the working day. Thereby energy buffers, once charged, may be caused to retain their stored energy for use in grid balancing at a later time, irrespective of engagement of the corresponding wireless power transfer system with a vehicle.

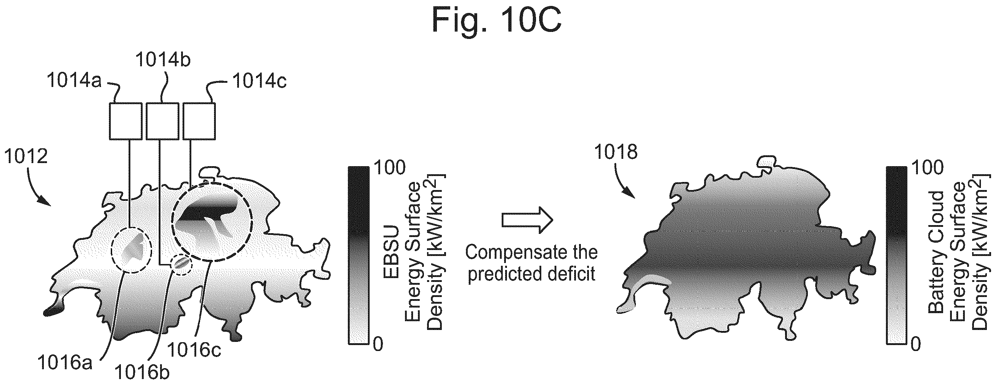

Referring to FIG. 10C, an energy surface density 1012 of the region is provided as determined using one or more subsystems 1014a-c of a system the present disclosure, each subsystem 1014a-c configured to model power transfer data obtained from ground assemblies in a corresponding subregion 1016a-c of the region. In some examples, as shown in FIG. 10C, systems of the present disclosure may be used to supplement other forms of electrical grid stability solution, such as solutions using electrical vehicle batteries as a form of energy storage and supply. Examples of such systems are described in European patent application no. 24198770.0, which is incorporated herein by reference in its entirety. In the example of FIG. 10C, the generated energy surface density 1012 of the system may indicate an availability of energy storage or energy availability within energy buffers of ground assemblies of the region, which may be used to supplement or compensate an indicated or predicted energy availability or energy storage deficit in the alternate solution, for example indicated by a corresponding determined energy surface density 1018 generated for the alternate solution (such as an electrical vehicle battery cloud as shown in FIG. 10C, and such as described in European patent application no. 24198770.0). The systems described herein may similarly form an energy buffer cloud, configured to manage regional grid instabilities either alone or in supplement to other available grid stability measures.

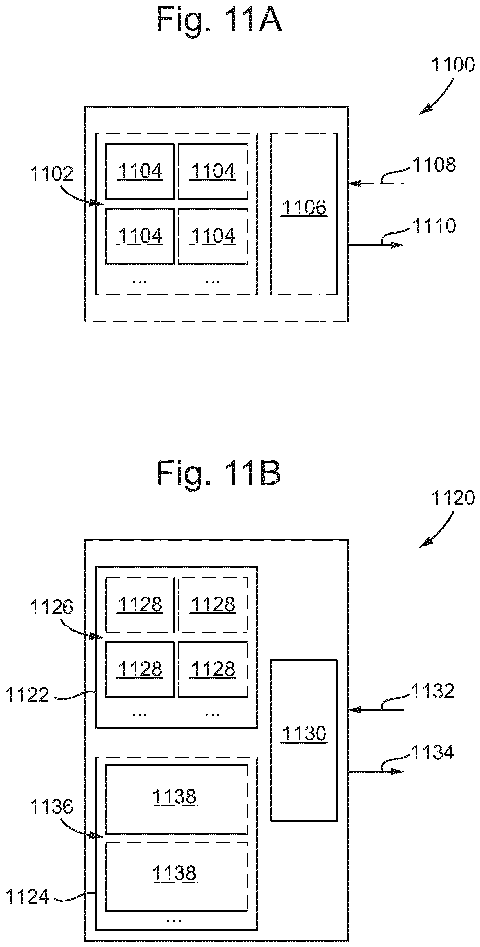

Referring to FIG. 11A, an example energy buffer 1100 suitable for use with systems and methods of the present disclosure is shown. The example energy buffer 1100 shown comprises a bank 1102 of supercapacitors 1104, four of which are shown depicted in FIG. 11A for illustrative purposes. The supercapacitor bank 1102 is shown connected to a control circuit 1106 configured for managing energy storage and regulating discharge of the supercapacitor bank 1102. The supercapacitors 1104 of the supercapacitor bank 1102 may be arranged in any suitable series-parallel configuration as will be appreciated, and collectively contribute to the energy storage capacity of the energy buffer 1100. The control circuit 1106 of the illustrative example is configured to monitor system parameters such as voltage and current, ensuring safe operation by preventing overcharging or over-discharging of individual supercapacitors 1104 in the bank 1102. The control circuit 1106 may be further configured to manage the energy discharge process, regulating the flow of the stored energy to the load or the grid, depending on system demands. Voltage balancing across the supercapacitors 1104 may be achieved through any suitable passive or active balancing components integrated into the control circuit 1106. The example 1100 of FIG.8A is shown comprising an input 1108 for receiving electrical energy from an external power source, such as the electrical grid of the region, and an output 1110 for delivering stored energy to a load or to the electrical grid. The input 1108 and the output 1110 connect to the control circuit 1106, ensuring controlled energy storage, and regulated discharge to match the energy demands of a load or the grid.

In use the supercapacitor bank 1102 provides a combination of energy storage and swift discharge capabilities for optimizing reaction time to a grid power outage experienced by the ground assembly (not shown). The example 1100 of FIG. 11A may therefore permit the mitigation of effects of a power outage on wireless power transfer systems while maintaining response time which may reduce the effects of transients events on power transfer components.

Referring to FIG. 11B, a further example energy buffer 1120 suitable for use with systems and methods of the present disclosure is shown. The example energy buffer 1120 shown comprises a first energy storage component 1122 and a second energy storage component 1124. The first energy storage component 1122 is similar to that described in relation to the example 1100 of FIG. 11A, and comprises a bank 1126 of supercapacitors 1128, four of which are shown depicted in FIG. 11B for illustrative purposes. The supercapacitor bank 1126 is in communication with a control circuit 1130 configured for managing energy storage and regulating discharge of the supercapacitor bank 1126. The supercapacitors 1128 of the supercapacitor bank 1126 may be arranged in any suitable series-parallel configuration as will be appreciated, and collectively contribute to the energy storage capacity of the first energy storage component 1122. The control circuit 1130 of the illustrative example is configured to monitor system parameters such as voltage and current, ensuring safe operation by preventing overcharging or over-discharging of individual supercapacitors 1128 in the bank 1126. The control circuit 1130 may be further configured to manage the energy discharge process, regulating the flow of the stored energy to the load or the grid, depending on system demands. Voltage balancing across the supercapacitors 1128 may be achieved through any suitable passive or active balancing components integrated into the control circuit 1130.

The second energy storage component 1124 comprises a battery bank 1136 comprising a plurality of rechargeable batteries 1138, with two batteries 1138 shown for illustrative purposes. The battery bank 1136 is in communication with the control circuit 1130 configured for managing energy storage and regulating discharge of the battery bank 1136. The batteries 1138 of the battery bank 1136 may be arranged in any suitable series-parallel configuration as will be appreciated, and collectively contribute to the energy storage capacity of the second energy storage component 1124. The control circuit 1130 of the illustrative example is configured to monitor system parameters such as state of charge, voltage, and temperature, ensuring safe operation by preventing overcharging or over-discharging of individual batteries 1138 in the bank 1136. The control circuit 1130 may be further configured to manage the energy discharge process, regulating the flow of the stored energy to the load or the grid, depending on system demands. Optional balancing componentry of the control circuit 1130 may be configured to ensure that individual cells within the battery bank 1136 remain evenly charged during operation.

The energy buffer 1120 of FIG. 11B is shown comprising an input 1132 for receiving electrical energy from an external power source, such as the electrical grid of the region, and an output 1134 for delivering stored energy to a load or to the electrical grid. The input 1132 and the output 1134 connect to the control circuit 1130, ensuring controlled direction and storage of input energy at the first or second energy storage component 1122, 1124 as required, and to ensure regulated discharge from the first or second energy storage component 1122, 1124 to match the energy demands of a load or the grid.

In use the supercapacitor bank 1126 of the first storage component 1122 provides swift discharge capabilities for optimizing reaction time to a grid power outage experienced by the ground assembly (not shown), while the battery bank 1136 of the second storage component 1124 provides extended storage capabilities for sustained discharge for applications wherein an extended grid power outage recovery time is expected, or for higher power demand applications. The example 1120 of FIG. 11B may therefore provide additional flexibility in mitigating effects of a power outage on wireless power transfer systems while maintaining response time which may reduce the effects of transients events on power transfer components.

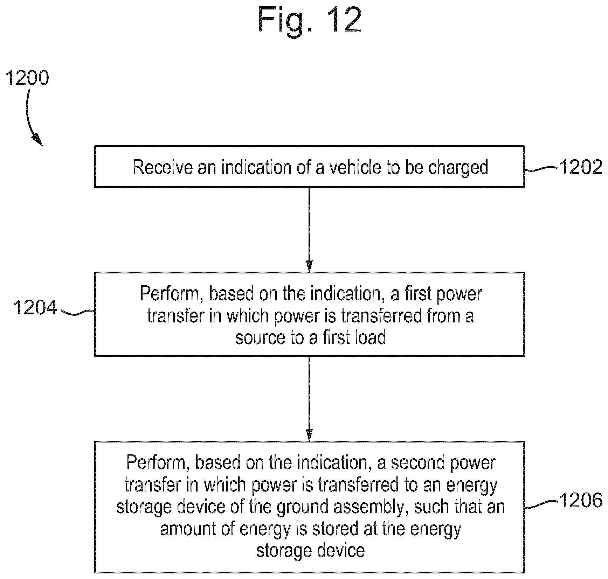

FIG. 12 depicts steps of an example method 1200 for performing wireless power transfer at a ground assembly of a wireless power transfer (WPT) system in accordance with the present disclosure. In particular, the method 1200 is for performing the wireless power transfer between an electric vehicle and either a source or a load. The method 1200 comprises the steps of: at 1202, receiving an indication of a vehicle to be charged; at 1204, performing, based on the indication, a first power transfer in which power is transferred from a source to a first load; and at 1206, performing, based on the indication, a second power transfer in which power is transferred to an energy buffer of the ground assembly, such that an amount of energy is stored at the energy buffer. In the example shown, the energy buffer is configured for automatic discharge of the amount of stored energy as power to the first load.

In some examples, the method may comprise, in response to an application of a second load at the ground assembly, discharging the amount of stored energy as power to the first load. In some examples, the second load may be a loss of power to the ground assembly, for example a drop or power outage as described herein. In some examples, the performing of the second power transfer may be based on second load information associated with a region of the ground assembly, for example data associated with grid power outages within the region as described herein. In some examples, the method may further comprise determining that the second power transfer is complete. Based on the determination an acknowledgment of the completion may be received. In some examples, the method may further comprise determining that the first power transfer is complete; and based on the determination, receiving an acknowledgment of the completion. In some examples, the method may further comprise determining that the first load is disengaged from the ground assembly; and based on the determination discharging the energy buffer. In some examples, performing the first power transfer is based on a determining that an electric vehicle assembly is in a predefined parking region of the ground assembly. It will be appreciated that the method 1200 may be performed by any suitable system such as those described herein, including the examples of FIG. 1 to FIG. 11.

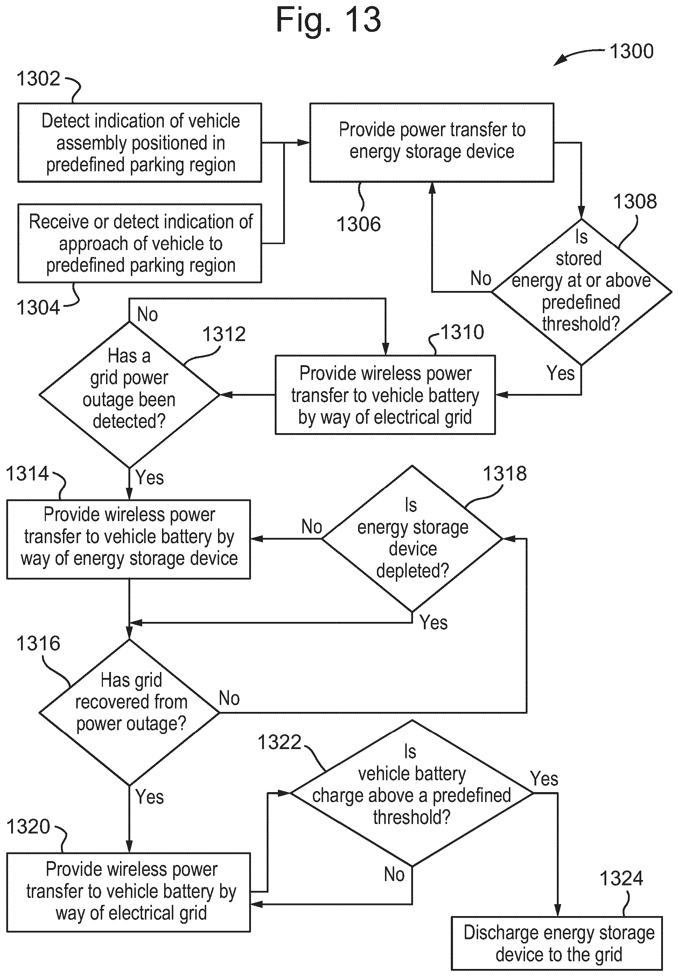

Referring to FIG. 13, steps of a further illustrative example method 1300 are shown for performing wireless power transfer at a ground assembly of a wireless power transfer (WPT) system in accordance with the present disclosure. In the method 1300 shown, at 1302, an indication of a vehicle assembly being positioned in a predefined parking region of a ground assembly, or a ground unit thereof, may be determined. As described herein, the positioning of the vehicle at the predefined parking region may establish a coupling factor between respective wireless power transfer coils of the ground assembly and the vehicle assembly such that standard compliant wireless power transfer may be performed between the ground assembly and the vehicle assembly. Such an indication may in some examples be provided by way of a position determining system as described herein. In some examples, at 1304, an indication of an approach of a vehicle toward the predefined parking region may be received or detected. For example, a positioning or localization system may indicate that the predefined parking region occurs on a planned or estimated trajectory of the vehicle, and the indication may be received or detected at a processor of a ground assembly.

In the example 1300 shown, at 1306, power transfer is provided to an energy buffer of the ground assembly from the electrical grid, such that the energy buffer is charged. The charging of the energy buffer occurs, in the example 1300 shown, prior to the charging of a battery of the vehicle, such that an energy buffer is provided against interruptions or power outages that may occur during the wireless power transfer to the vehicle battery from the grid. In some examples, it will be appreciated that the energy buffer and the vehicle battery may be charged simultaneously. In some examples, an upcoming interruption or power outage may be detected or predicted, and may trigger or cause the energy buffer to be charged, either before or during the charging of the vehicle battery.

At 1308, it may be determined whether stored energy at the energy buffer is equal to or exceeds a predefined energy storage threshold. The energy storage threshold may be determined by any suitable method such as described herein, and may in some examples be specific to a region in which the ground assembly is located. In some such examples, the energy storage threshold may be based on historic or predicted power outage data for the region, optionally in combination with power transfer usage or activity data associated with the ground assembly or ground unit thereof. In the event that the stored energy of the energy buffer does not equal or exceed the predefined energy storage threshold, the power transfer from the grid to the energy buffer may continue. In the event that the stored energy of the energy buffer meets or exceeds the energy storage threshold, at 1310 wireless power transfer may be provided from the electrical grid to the vehicle battery by way of power transfer circuitry of the ground assembly.

At 1312, it may be determined, during the provision of wireless power transfer to the vehicle at 1310, whether a grid power outage has been detected. In the event that no outage was detected, wireless power transfer to the vehicle from the grid at 1310 may continue. In the event that a power outage has been detected, at 1314, stored energy at the energy buffer may be discharged and directed by way of control circuitry to be used to provide continued wireless power transfer to the vehicle battery. While the example 1300 describes the detection of a power outage prior to the provision of wireless power transfer to the vehicle battery by way of the energy buffer for illustrative purposes, in some examples the discharge of the stored energy may be an automatic consequence of a lack of power received from the grid, and electrostatic discharge of the energy from the energy buffer may be such that the effect of transient events due to dissipation of remaining stored energy in the resonator tank of the power transfer circuitry of the ground assembly and the vehicle assembly is reduced.

At 1316, an ongoing determination of whether the grid has recovered from the power outage may be performed. The determination may, in some examples, be performed after a predefined recovery period or window determined for the specific region as described herein. In some examples the determination may be performed following the detection of the stored energy of the energy buffer below a predetermined lower threshold. In some such examples, the energy buffer may continue to be used as a source of power for the wireless power transfer until it is determined that the energy buffer is depleted. In the event, at 1316, that it is determined that the grid has not recovered from the power outage, it may be determined whether the energy buffer is depleted, at 1318. If the energy buffer is determined to be depleted at 1318, no further power transfer may be performed until the grid recovers from the power outage, and the energy buffer has served as an extension of the wireless power transfer process to usefully continue to charge the electric vehicle battery in the event of the power outage. If the energy buffer is determined not to be depleted at 1318, the energy buffer may continue to be used to provide wireless power transfer to the electric vehicle battery.

In the event that, at 1316, it is determined that the grid has recovered from the power outage, wireless power transfer to the vehicle battery by way of the grid may be resumed at 1320. At 1322, it may be determined whether the vehicle battery is charged at or above a predefined charge threshold, which may in some examples correspond to a full charge. In the event that the predefined charge threshold is not met, at 1320 the wireless power transfer to the electric vehicle by way of the grid may continue. If at 1322 the predefined charging threshold is determined to be met, the vehicle may be deemed to be sufficiently charged and at 1324 the stored energy of the energy buffer may be discharged to the grid. In some examples, the discharge of the stored energy to the grid may comprise an acknowledgement from the grid, for example from an operator of the grid. In some examples, discharge of the stored energy of the energy buffer may be provided to any suitable power receiver, such as an electrical circuitry of a home.

Further examples will be appreciated which do not depart from the scope of the present disclosure. Any suitable combination of the features described herein may be incorporated into examples while remaining within the scope of the appended claims. For example, while the described examples discuss the transfer of power between an electric vehicle and a grid, examples will be appreciated wherein at least a portion of the stored energy of the energy stored device is sourced from one or more batteries of one or more vehicles, such as the vehicle to be charged, or another vehicle among a plurality of vehicles engaged with corresponding ground units of the ground assembly. In some examples, a charge level of one or more batteries of the vehicles engaged with corresponding ground units may be determined, measured, sensed, predicted or estimated, and based on the determination, measuring, sensing, predicting or estimating, the vehicle may be determined for providing at least a portion of the stored energy of the energy buffer and/or the electric vehicle battery. Such a vehicle-based charging of the energy buffer may be performed in any suitable manner, and may, for example, be performed in anticipation of an arrival of a vehicle to be charged. In some such examples, a fleet of electric vehicles may engage corresponding ground units of a ground assembly, location data, such as including trajectory or journey data, of each fleet vehicle accessible by way of a fleet management system. The location or journey of a vehicle to be charged may be determined to include a predefined parking region of a ground unit of the ground assembly, and in response to such determination, the energy buffer may be charged in any suitable manner, such as using power transfer from the grid, or from a battery of a determined vehicle within the fleet.

The present disclosure may be further understood with reference to the following examples.

Example 1: A ground assembly of a wireless power transfer (WPT) system for wirelessly charging an electric vehicle, the ground assembly comprising: power transfer circuitry: and an energy buffer; wherein the power transfer circuitry is configured to cause: a first power transfer in which power is transferred wirelessly to, and stored in, an energy storage device of an electric vehicle; a second power transfer in which power is transferred to, and stored in, the energy buffer of the ground assembly; and automatic discharge of an amount of stored energy in the energy buffer based on a state of charge of the energy storage device.

Example 2: A ground assembly of Example 1, wherein the power transfer circuitry is configured to cause the second power transfer to be performed before the first power transfer.

Example 3: A ground assembly of Example 2, wherein during the second power transfer, the power transfer circuitry is configured to cause transfer of an amount of power equal to a power transfer threshold of the energy buffer, before causing the first power transfer.

Example 4: A ground assembly of Example 3, wherein the power transfer threshold is based on an average duration of a loss of power to the ground assembly.

Example 5: A ground assembly of Example 4, wherein the loss of power is an electrical grid power outage in a geographical region of the ground assembly.

Example 6: A ground assembly of Example 3, Example 4 or Example 5, wherein the power transfer threshold is based on power transfer data associated with the ground assembly.

Example 7: A ground assembly of any one of Examples 3 to 6, wherein the power transfer circuitry is configured to cause transfer of the amount of power equal to the power transfer threshold of the energy buffer at or before a target time.

Example 8: A ground assembly of Example 7, wherein the target time is based on power transfer data associated with the ground assembly.

Example 9: A ground assembly of Example 1, wherein the power transfer circuitry is configured to cause the first power transfer and the second power transfer to be performed simultaneously.

Example 10: A ground assembly of any one of the preceding Examples, wherein the energy buffer, or a first energy storage component thereof, comprises one or more supercapacitors.

Example 11: A ground assembly of any one of the preceding Examples, wherein the energy buffer comprises a first energy storage component and a second energy storage component.

Example 12: A ground assembly of Example 10 or Example 11, wherein the first energy storage component is configured for automatic instantaneous discharge of the amount of stored energy in response to a load applied to the power transfer circuitry.

Example 13: A ground assembly of Example 11 or Example 12, wherein the second energy storage component is configured for continued discharge during or following the discharge of stored energy from the first energy storage component.

Example 14: A ground assembly of Example 13, wherein the second energy storage component comprises one or more batteries.

Example 15: A ground assembly of any one of the preceding Examples, wherein the automatic discharge is caused based on a loss of power to the ground assembly.

Example 16: A ground assembly of Example 15, wherein the loss of power is an electrical grid power outage in a geographical region of the ground assembly.

Example 17: A ground assembly of any one of the preceding Examples, wherein the automatic discharge of the amount of stored energy is to one or more selected from: the energy storage device of the electric vehicle; an electrical grid; a home electrical circuitry.

Example 18: A ground assembly of any one of the preceding Examples, further comprising a control circuitry configured to regulate the automatic discharge.

Example 19: A ground assembly of any one of the preceding Examples, wherein the power transfer circuitry is configured to operate in a vehicle-to-grid (V2G) mode, wherein during operation in the V2G mode, the energy buffer is configured to discharge the amount of stored energy to an electrical grid.

Example 20: A ground assembly of any one of the preceding Examples, the ground assembly comprising: a plurality of ground units, each ground unit comprising a corresponding power transfer circuitry; and a single energy buffer configured to discharge the amount of stored energy by way of the power transfer circuitry of each ground unit of the plurality of ground units.

Example 21: A ground assembly of any one of Examples 1 to 19, the ground assembly comprising: a plurality of ground units, each ground unit comprising a corresponding power transfer circuitry and a corresponding energy buffer configured to discharge the amount of stored energy by way of the power transfer circuitry of the corresponding ground unit of the plurality of ground units.

Example 22: A ground assembly of any one of the preceding Examples, wherein at least a portion of the second power transfer is transferred from the energy storage device of the electric vehicle.

Example 23: A ground assembly of Example 22, wherein the second power transfer is performed based on a determination of an energy storage device.

Example 24: A method for performing wireless power transfer at a ground assembly of a wireless power transfer (WPT) system, for charging an electric vehicle, the method comprising: receiving, using control circuitry, an indication of a vehicle to be charged; causing, using control circuitry, based on the indication, a first power transfer in which power is transferred to, and stored in, an energy storage device of an electric vehicle; causing, using control circuitry, based on the indication, a second power transfer in which power is transferred to, and stored in, an energy buffer of the ground assembly; and causing, based on a state of charge of the energy storage device, automatic discharge of an amount of stored energy in the energy buffer.

Example 25: A non-transitory storage medium having computer-readable instructions stored thereon, the computer readable instructions operable when executed by a processing device to: receive an indication of a vehicle to be charged; cause, based on the indication, a first power transfer in which power is transferred to, and stored in, an energy storage device of an electric vehicle; cause, based on the indication, a second power transfer in which power is transferred to, and stored in, an energy buffer of the ground assembly; and cause, based on a state of charge of the energy storage device, automatic discharge of an amount of stored energy in the energy buffer.

Example 26: A vehicle assembly configured to cooperate with a ground assembly of any one of Examples 1 to 23, for charging an electric vehicle. The vehicle assembly comprises wireless power transfer circuitry configured to engage corresponding power transfer circuitry of the ground assembly; the ground assembly further comprising an energy buffer; wherein the wireless power transfer circuitry of the vehicle assembly is configured to cause: a first power transfer in which power is transferred wirelessly to, and stored in, an energy storage device of the electric vehicle; and automatic discharge of an amount of stored energy in the energy buffer to the energy storage device of the electric vehicle, based on a state of charge of the electric vehicle.

Example 27: A vehicle comprising the vehicle assembly according to Example 26.

Example 28: An electrical grid monitoring system for balancing power transfer between an energy buffer of a wireless power transfer (WPT) system and an electrical grid, the system comprising: a plurality of WPT systems located within a region, each WPT system comprising an energy buffer and configured to enable the wireless transfer of power between the energy buffer and one of, or both of: an electric vehicle; and the electrical grid; a memory storing a model of power transfer data obtained from the plurality of WPT systems; and a processor configured to use the model to predict, based on the power transfer data, a power status of the region at a time instance; wherein the processor is further configured to set a direction of net power transfer of the plurality of WPT systems based on the predicted power status of the region at the time instance. It will be appreciated that the energy buffer may be an energy buffer as described in relation to any one of Examples 1 to 27, and may in some examples comprise one or more supercapacitors, one or more batteries, or any suitable combination thereof as described herein.

Example 29: The electrical grid monitoring system of Example 28, wherein the predicted power status comprises at least one of: a power surface density of the region at the time instance; an energy surface density of the region at the time instance.

Example 30: The electrical grid monitoring system of Example 28 or Example 29, wherein the predicted power status is based at least in part on a direction of net power transfer of the plurality of WPT systems.

Example 31: The electrical grid monitoring system of Example 28, Example 29 or Example 30, wherein the model is a machine learning model trained on the power transfer data.

Example 32: The electrical grid monitoring system of any one of Examples 28 to 31, wherein the power transfer data comprises, for each WPT system, at least one of: a location of the WPT in the region; a duration for which the electric vehicle is engaged with the WPT system; a duration of charging of the energy storage device of the electric vehicle; an energy storage device characteristic of the energy storage device; a duration of charging of the energy buffer; an energy buffer characteristic; an environmental characteristic of the power transfer system.

Example 33: The electrical grid monitoring system of Example 32, wherein the energy buffer characteristic comprises one or more characteristics selected from: an energy buffer type; an energy buffer manufacturer; an energy buffer model number; an energy buffer digital twin; an energy buffer charge method; an energy buffer discharge method; a WPT operational range; a state of charge of the energy buffer; a state of health of the energy buffer; a state of function of the energy buffer; a capacity of the energy buffer; a voltage of the energy buffer; a current of the energy buffer; a capacitance of the energy buffer; a temperature of the energy buffer; a pressure; an internal resistance of the energy buffer; a threshold charging current of the energy buffer; a threshold charging voltage of the energy buffer; a threshold charging impedance of the energy buffer; a threshold charging resistance of the energy buffer; a threshold charging rate of the energy buffer; a C-rate of the energy buffer; an E-rate of the energy buffer; an energy density of the energy buffer; a power density of the energy buffer; a cycle life of the energy buffer; a fault detection of the energy buffer; a diagnostic status of the energy buffer.

Example 34: The electrical grid monitoring system of any one of Examples 28 to 33, wherein the direction of net power transfer is one selected from: electrical grid to energy buffer transfer; or energy buffer to power receiver transfer.

Example 35: The electrical grid monitoring system of Example 34, wherein the power receiver is the electrical grid.

Example 36: The electrical grid monitoring system of Example 34 or Example 35, further comprising: one or more power supply sensors configured to detect an amount of power supplied to the electrical grid; and one or more power consumption sensors configured to detect an amount of power consumed from the electrical grid; and wherein the processor is further configured to determine, based on the detected amount of power supplied to the electrical grid, and the detected amount of power consumed from the electrical grid, a net power availability of the electrical grid.

Example 37: The electrical grid monitoring system of Example 36, wherein when the net grid power availability is positive, the processor is configured to set the direction of power transfer of at least one of the plurality of WPT systems to electrical grid to energy buffer transfer; and when the net grid power availability is negative, the processor is configured to set the direction of power transfer of at least one of the plurality of WPT systems to energy buffer to power receiver transfer.

Example 38: The electrical grid monitoring system of Example 37, wherein the prediction of the power status of the region at the time instance, based on the power transfer data, further comprises predicting an oversupply threshold, the oversupply threshold comprising a predicted maximum amount of available energy buffer capacity to receive the electrical grid to energy buffer power transfer at the time instance.

Example 39: The electrical grid monitoring system of Example 38, wherein the prediction of the power status of the region at the time instance based on the power transfer data further comprises predicting an undersupply threshold, the undersupply threshold comprising a predicted maximum amount of available energy buffer power to provide the energy buffer to power receiver power transfer at the time instance.

Example 40: The electrical grid monitoring system of Example 39, wherein the processor is further configured to detect that the net grid power availability is above a predefined confidence interval of the oversupply threshold, or below a predefined confidence interval of the undersupply threshold; and wherein the processor is further configured to, in response to the detection, calculate a real-time power status of the region at the time instance.

Example 41: The electrical grid monitoring system of Example 40, wherein the processor is further configured to, in response to the detection that the net grid power availability is above a predefined confidence interval of the oversupply threshold: identify one or more electrical power receivers that are external to the electrical grid, and configured to receive power from the electrical grid; and configure the electrical grid to provide an amount of power to the one or more electrical power receivers.

Example 42: The electrical grid monitoring system of Example 41, wherein the plurality of power transfer systems are located within a first region, and wherein the one or more electrical power receivers comprise an electrical grid of a second region.

Example 43: The electrical grid monitoring system of Example 42, wherein the identifying of the one or more electrical power receivers is further in response to a detection that the net grid power availability of the electrical grid of the second region is below the predefined confidence interval of the undersupply threshold.

Example 44: The electrical grid monitoring system of Example any one of Examples 40 to 43, wherein the processor is further configured to, in response to the detection that the net grid power availability is below a predefined confidence interval of the undersupply threshold: identify one or more electrical power providers that are external to the electrical grid, and configured to provide power to the electrical grid; and configure the electrical grid to receive an amount of power from the one or more electrical power providers.

Example 45: The electrical grid monitoring system of Example 44, wherein the plurality of WPT systems are located within a first region, and wherein the one or more electrical power receivers comprise an electrical grid of a second region.

Example 46: The electrical grid monitoring system of Example 45, wherein the identifying of the one or more electrical power providers is further in response to a detection that the net grid power availability of the electrical grid of the second region is above the predefined confidence interval of the oversupply threshold.

Example 47: A method for balancing power transfer between energy buffers of WPT systems and an electrical grid, the method comprising: receiving from a first sensor, a power consumption value indicating an amount of power consumed from the electrical grid of a region; receiving from a second sensor, a power generation value indicating an amount of power provided to the electrical grid of the region; calculating, using the power consumption value and the power generation value, a net grid power availability of the region; predicting, using a model of power transfer data from a plurality of WPT systems distributed within the region, a power status of the region; and controlling, based on the predicted power status of the region, a direction of power transfer of at least one of the plurality of WPT systems.

Example 48: The method of Example 47, wherein the model is a machine learning model, the method further comprising: training, using the power transfer data, the machine learning model to predict, based on the power transfer data, the power status of the region at a time instance.

Example 49: The method of Example 47 or of Example 48, wherein the method is performed using a system of any one of Examples 1 to 20.

Example 50: A non-transitory computer readable storage medium comprising computer-executable instructions stored thereon, the computer executable instructions configured, when executed by a processor, to: receive from a first sensor, a power consumption value indicating an amount of power consumed from the electrical grid of a region; receive from a second sensor, a power generation value indicating an amount of power provided to the electrical grid of the region; calculate, using the power consumption value and the power generation value, a net grid power availability of the region; predict, using a model of power transfer data from a plurality of WPT systems distributed within the region, a power status of the region; and control, based on the predicted power status of the region, a direction of power transfer of at least one of the plurality of WPT systems.

Example 51: A method for balancing power transfer between energy buffers of WPT systems and an electrical grid, the method comprising: receiving power transfer data from a plurality of WPT systems distributed within a region, the power transfer data indicating an energy buffer capacity of the WPT system for permitting power transfer between the energy buffer and the electrical grid, and time data associated with the energy buffer capacity; and training, using the power transfer data, a machine learning model to predict, based on the power transfer data, a power status of the region at a corresponding time instance.

The systems and processes described above are intended to be illustrative and not limiting. One skilled in the art would appreciate that the steps of the processes discussed herein may be omitted, modified, combined, and/or rearranged, and any additional steps may be performed without departing from the scope of the invention. More generally, the above disclosure is meant to be illustrative and not limiting. Only the claims that follow are meant to set bounds as to what the present invention includes. Furthermore, it should be noted that the features and limitations described in any one example may be applied to any other example herein, and flowcharts or examples relating to one example may be combined with any other example in a suitable manner, done in different orders, or done in parallel. In addition, the systems and methods described herein may be performed in real time. It should also be noted that the systems and/or methods described above may be applied to, or used in accordance with, other systems and/or methods.

## Claims

1. A ground assembly of a wireless power transfer (WPT) system for wirelessly charging an electric vehicle, the ground assembly comprising:
power transfer circuitry; and
an energy buffer;
wherein the power transfer circuitry is configured to cause:
a first power transfer in which power is transferred wirelessly to and stored in an energy storage device of the electric vehicle;
a second power transfer in which power is transferred to and stored in the energy buffer of the ground assembly; and
automatic discharge of an amount of stored energy in the energy buffer based on a state of charge of the energy storage device.

2. A ground assembly as claimed in claim 1, wherein the power transfer circuitry is configured to cause the second power transfer to be performed before the first power transfer, or wherein the power transfer circuitry is configured to cause the first power transfer and the second power transfer to be performed simultaneously.

3. A ground assembly as claimed in claim 2, wherein the power transfer circuitry is configured to cause the second power transfer to be performed before the first power transfer, and wherein during the second power transfer, the power transfer circuitry is configured to cause transfer of an amount of power equal to a power transfer threshold of the energy buffer, before causing the first power transfer.

4. A ground assembly as claimed in claim 3, wherein the power transfer threshold is based on an average duration of a loss of power to the ground assembly; optionally,
wherein the loss of power is an electrical grid power outage in a geographical region of the ground assembly; optionally,
wherein the power transfer threshold is based on power transfer data associated with the ground assembly.

5. A ground assembly as claimed in claim 3 or claim 4, wherein the power transfer circuitry is configured to cause transfer of the amount of power equal to the power transfer threshold of the energy buffer at or before a target time; optionally,
wherein the target time is based on power transfer data associated with the ground assembly.

6. A ground assembly as claimed in any one of the preceding claims, wherein the energy buffer, or a first energy storage component thereof, comprises one or more supercapacitors.

7. A ground assembly as claimed in any one of the preceding claims, wherein the energy buffer comprises a first energy storage component and a second energy storage component; and optionally one or more selected from:
i. wherein the first energy storage component is configured for automatic instantaneous discharge of the amount of stored energy in response to a load applied to the power transfer circuitry; and,
ii. wherein the second energy storage component is configured for continued discharge during or following the discharge of stored energy from the first energy storage component; optionally,
wherein the second energy storage component comprises one or more batteries.

8. A ground assembly as claimed in any one of the preceding claims, wherein the automatic discharge is caused based on a loss of power to the ground assembly; optionally,
wherein the loss of power is an electrical grid power outage in a geographical region of the ground assembly.

9. A ground assembly as claimed in any one of the preceding claims, wherein the automatic discharge of the amount of stored energy is to one or more selected from: the energy storage device of the electric vehicle; an electrical grid; a home electrical circuitry; optionally,
wherein the power transfer circuitry is configured to operate in a vehicle-to-grid (V2G) mode, wherein during operation in the V2G mode, the energy buffer is configured to discharge the amount of stored energy to an electrical grid.

10. A ground assembly as claimed in any one of the preceding claims, the ground assembly comprising either:
i. a plurality of ground units, each ground unit comprising a corresponding power transfer circuitry; and
a single energy buffer configured to discharge the amount of stored energy by way of the power transfer circuitry of each ground unit of the plurality of ground units; or
ii. a plurality of ground units, each ground unit comprising a corresponding power transfer circuitry and a corresponding energy buffer configured to discharge the amount of stored energy by way of the power transfer circuitry of the corresponding ground unit of the plurality of ground units.

11. A ground assembly as claimed in any one of the preceding claims, wherein at least a portion of the second power transfer is transferred from the energy storage device of the electric vehicle; optionally,
wherein the second power transfer is performed based on a determination of an energy storage device.

12. A method for performing wireless power transfer at a ground assembly of a wireless power transfer (WPT) system, for charging an electric vehicle, the method comprising:
receiving, using control circuitry, an indication of a vehicle to be charged;
causing, using control circuitry, based on the indication, a first power transfer in which power is transferred to, and stored in, an energy storage device of an electric vehicle;
causing, using control circuitry, based on the indication, a second power transfer in which power is transferred to, and stored in, an energy buffer of the ground assembly; and
causing, based on a state of charge of the energy storage device, automatic discharge of an amount of stored energy in the energy buffer.

13. A non-transitory storage medium having computer-readable instructions stored thereon, the computer readable instructions operable when executed by a processing device to:
receive an indication of a vehicle to be charged;
cause, based on the indication, a first power transfer in which power is transferred by way of a power transfer circuitry to, and stored in, an energy storage device of an electric vehicle;
cause, based on the indication, a second power transfer in which power is transferred to, and stored in, an energy buffer of the ground assembly; and
cause, based on a state of charge the energy storage device, automatic discharge of an amount of stored energy in the energy buffer.

14. A vehicle assembly configured to cooperate with a ground assembly of any one of claims 1 to 11, for charging an electric vehicle, the vehicle assembly comprising:
wireless power transfer circuitry configured to engage corresponding power transfer circuitry of the ground assembly;
the ground assembly further comprising an energy buffer;
wherein the wireless power transfer circuitry of the vehicle assembly is configured to cause:
a first power transfer in which power is transferred wirelessly to, and stored in, an energy storage device of the electric vehicle; and
automatic discharge of an amount of stored energy in the energy buffer to the energy storage device of the electric vehicle, based on a state of charge of the energy storage device.

15. A vehicle comprising the vehicle assembly according to claim 14.
